# EUROPEAN PATENT APPLICATION

(11) **EP 4 570 697 A2**
(43) Date of publication of application: **18.06.2025**
(21) Application number: 25173196.4
(22) Date of filing: 29.09.2020
(51) Int. Cl.: B65D 65/40

(54) **BARRIER LAMINATE AND PACKAGING CONTAINER WITH BARRIER LAMINATE**

(30) Priority: 30.09.2019 JP 2019181013; 30.09.2019 JP 2019181017; 30.09.2019 JP 2019181039
(62) Divisional of application: 20873025.9
(71) Applicant: Dai Nippon Printing Co., Ltd., Tokyo 162-8001 (JP)
(72) Inventor: FURUYA, Shunsuke, Shinjuku-ku, Tokyo, 162-8001 (JP); YAMATO, Yohei, Shinjuku-ku, Tokyo, 162-8001 (JP); OKUMURA, Shohei, Shinjuku-ku, Tokyo, 162-8001 (JP); SUZUKI, Tsuyoshi, Shinjuku-ku, Tokyo, 162-8001 (JP); TAKAHASHI, Hideaki, Shinjuku-ku, Tokyo, 162-8001 (JP)
(74) Representative: Müller-Boré & Partner Patentanwälte PartG mbB

(57) **Abstract**

The present invention is directed to the use of a laminate comprising an evaporated film; a surface coating layer; and a polypropylene layer for manufacturing a barrier laminate, which comprises a substrate; an adhesive layer; the evaporated film; an intermediate layer; and a sealant layer. The intermediate layer includes the surface coating layer and the polypropylene resin layer The evaporated film is provided on the surface coating layer and the laminate further includes a barrier coating layer on the evaporated film The polypropylene resin layer is subjected to a stretching process, the surface coating layer contains a resin material with a polar group, and the evaporated film comprises an inorganic oxide.

## Description

### Technical Field

The present invention relates to a barrier laminate and a packaging container with the barrier laminate.

### Background Art

Films formed of polyesters, such as poly(ethylene terephthalate), (hereinafter also referred to as a "polyester film") have good mechanical characteristics, chemical stability, heat resistance, and transparency, and are inexpensive. Thus, polyester films have been used as substrates constituting laminates used to produce packaging containers.

Depending on the contents to be filled in a packaging container, the packaging container is required to have gas barrier properties, such as high oxygen barrier properties and high moisture barrier properties. To satisfy this requirement, an evaporated film containing alumina, silica, or the like is often formed on the surface of a polyester film of a packaging container (PTL 1).

In recent years, resin materials that can substitute for polyester films have been researched, and the application of a polyolefin film, particularly a polypropylene film, to a substrate has been studied.

Application of a polyolefin film, particularly a polypropylene film having an evaporated film on its surface, to an intermediate layer has been studied.

### Citation List

### Patent Literature

PTL 1: Japanese Unexamined Patent Application Publication No. 2005-053223

### Summary of Invention

### Technical Problem

The present inventors have studied the use of a stretched film of polypropylene (hereinafter also referred to as a stretched polypropylene film) instead of known polyester films. On the basis of study results, the present inventors have found a new problem that even an evaporated film formed on the surface of a stretched polypropylene film cannot have satisfactory gas barrier properties.

On the basis of further study results, the present inventors have found that a packaging container with a barrier laminate having an evaporated film formed on the stretched polypropylene film exhibits a characteristic phenomenon that is not observed in known barrier laminates with a polyester film, that is, interlayer separation between the stretched polypropylene film and the evaporated film, and the phenomenon impairs gas barrier properties.

The present inventors have also found that a surface coating layer containing a resin material with a polar group on the surface of a stretched polypropylene film can improve the adhesiveness of an evaporated film formed on the surface coating layer and also improve the gas barrier properties.

The present invention has been accomplished on the basis of these findings and aims to provide a barrier laminate that has a multilayer substrate or an intermediate layer with high interlayer adhesiveness to an evaporated film and that has high gas barrier properties.

It is another object of the present invention to provide a packaging container with the barrier laminate.

### Solution to Problem

A barrier laminate according to a first embodiment includes a multilayer substrate, an evaporated film, and a sealant layer,
wherein the multilayer substrate includes at least a polypropylene resin layer and a surface coating layer,
the polypropylene resin layer is subjected to a stretching process,
the surface coating layer contains a resin material with a polar group, and
the evaporated film comprises an inorganic oxide.

In the barrier laminate according to the first embodiment, the polypropylene resin layer and the sealant layer may comprise the same material, and
the same material may be polypropylene.

A barrier laminate according to a second embodiment includes a multilayer substrate, a first evaporated film, an adhesive layer, and a sealant layer,
wherein the multilayer substrate includes at least a polypropylene resin layer and a surface coating layer,
the polypropylene resin layer is subjected to a stretching process,
the surface coating layer contains a resin material with a polar group,
the first evaporated film comprises an inorganic oxide, and
the sealant layer includes a second evaporated film and a sealant substrate.

In the barrier laminate according to the second embodiment, the polypropylene resin layer and the sealant substrate may comprise the same material, and
the same material may be polypropylene.

In the barrier laminate according to the second embodiment, the second evaporated film may be an aluminum evaporated film, and
the adhesive layer may be an adhesive agent layer containing a cured product of a composition containing a polyester polyol and an isocyanate compound.

A barrier laminate according to a third embodiment includes a substrate, an adhesive layer, an evaporated film, an intermediate layer, and a sealant layer,
the intermediate layer includes a surface coating layer and a polypropylene resin layer,
the polypropylene resin layer is subjected to a stretching process,
the surface coating layer contains a resin material with a polar group, and
the evaporated film comprises an inorganic oxide.

In the barrier laminate according to the third embodiment, the polypropylene resin layer, the substrate, and the sealant layer may comprise the same material, and
the same material may be polypropylene.

In the barrier laminate according to the third embodiment, the adhesive layer may be an adhesive agent layer containing a cured product of a composition containing a polyester polyol and an isocyanate compound.

In the barrier laminate, the surface coating layer may have a thickness in the range of 0.08% to 20% of the total thickness of the multilayer substrate or the intermediate layer.

In the barrier laminate, the surface coating layer may have a thickness in the range of 0.02 to 10 µm.

In the barrier laminate, the resin material may be at least one resin material selected from ethylene vinyl alcohol copolymers (EVOHs), poly(vinyl alcohol) (PVA), polyesters, poly(ethylene imine), (meth)acrylic resins with a hydroxy group, nylon 6, nylon 6,6, MXD nylon, amorphous nylon, and polyurethanes.

In the barrier laminate, the surface coating layer may be a layer formed using an aqueous emulsion or a solvent emulsion.

The barrier laminate may further include a barrier coating layer between the multilayer substrate and the evaporated film, between the multilayer substrate and the first evaporated film, or between the intermediate layer and the evaporated film.

The barrier laminate may be used for a packaging container.

A packaging container according to the present invention includes the barrier laminate.

### Brief Description of Drawings

[Fig. 1] Fig. 1 is a schematic cross-sectional view of an embodiment of the barrier laminate according to the first embodiment.
[Fig. 2] Fig. 2 is a schematic cross-sectional view of an embodiment of the barrier laminate according to the first embodiment.
[Fig. 3] Fig. 3 is a schematic cross-sectional view of an embodiment of a deposition apparatus.
[Fig. 4] Fig. 4 is a schematic cross-sectional view of an embodiment of a deposition apparatus.
[Fig. 5] Fig. 5 is a schematic cross-sectional view of another embodiment of a deposition apparatus.
[Fig. 6] Fig. 6 is a schematic cross-sectional view of an embodiment of the barrier laminate according to the second embodiment.
[Fig. 7] Fig. 7 is a schematic cross-sectional view of an embodiment of the barrier laminate according to the second embodiment.
[Fig. 8] Fig. 8 is a schematic cross-sectional view of an embodiment of the barrier laminate according to the third embodiment.
[Fig. 9] Fig. 9 is a schematic cross-sectional view of an embodiment of the barrier laminate according to the third embodiment.
[Fig. 10] Fig. 10 is a front view of an embodiment of a packaging container according to the present invention.
[Fig. 11] Fig. 11 is a perspective view of an embodiment of a packaging container according to the present invention.
[Fig. 12] Fig. 12 is a schematic view of an example of a method for measuring laminate strength.
[Fig. 13] Fig. 13 is a schematic view of an example of a method for measuring laminate strength.
[Fig. 14] Fig. 14 is a graph showing changes in tensile stress as a function of the distance between a pair of clamps pulling a substrate and a sealant layer to measure laminate strength.

### Description of Embodiments

Each of the barrier laminate according to the first embodiment, the barrier laminate according to the second embodiment, and the barrier laminate according to the third embodiment of the present invention is also hereinafter referred to simply as a "barrier laminate". A barrier laminate according to the present invention is described below with reference to the accompanying drawings.

### (Barrier Laminate according to First Embodiment)

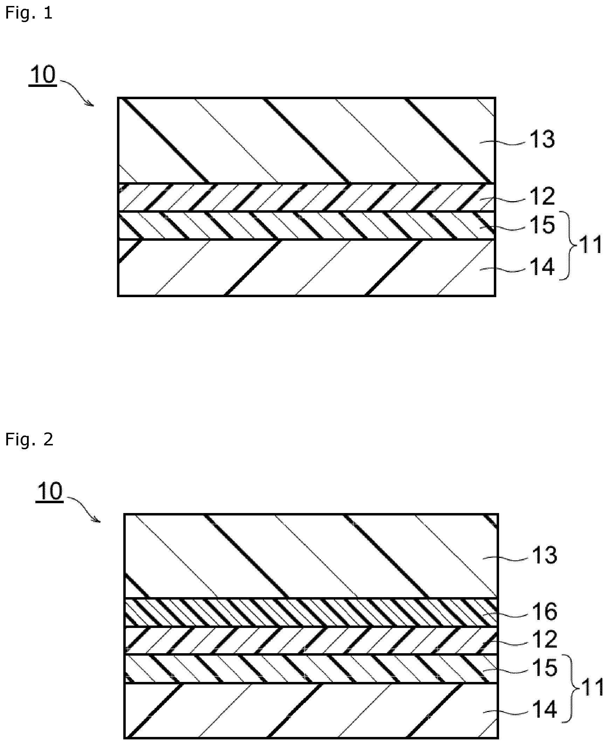

Figs. 1 and 2 are schematic cross-sectional views of an embodiment of the barrier laminate according to the first embodiment. As illustrated in Fig. 1, a barrier laminate 10 according to the first embodiment includes a multilayer substrate 11, an evaporated film 12, and a sealant layer 13, and the multilayer substrate 11 includes at least a polypropylene resin layer 14 and a surface coating layer 15.

In one embodiment, as illustrated in Fig. 2, the barrier laminate 10 according to the first embodiment further includes a barrier coating layer 16 between the evaporated film 12 and the sealant layer 13.

In one embodiment, the barrier laminate according to the first embodiment includes an adhesive layer between the evaporated film and the sealant layer (not shown).

In one embodiment, the barrier laminate according to the first embodiment includes an intermediate layer between the evaporated film and the sealant layer.

The barrier laminate according to the first embodiment preferably has a haze of 20% or less, more preferably 5% or less. Such a barrier laminate can have improved transparency.

In the present description, the haze of a barrier laminate is measured with a haze meter (Murakami Color Research Laboratory) in accordance with JIS K 7105: 1981.

In the barrier laminate according to the first embodiment, the laminate strength between the multilayer substrate and the evaporated film at a width of 15 mm is preferably 3 N or more, more preferably 4 N or more, still more preferably 5.5 N or more. The upper limit of the laminate strength of the barrier laminate according to the first embodiment may be 20 N or less.

A method for measuring the laminate strength of a barrier laminate is described later in Examples.

Laminates of a substrate and a sealant layer comprising different resin materials have been used to produce packaging containers. After used packaging containers are collected, however, it is difficult to separate the substrate from the sealant layer, and therefore the used packaging containers are not actively recycled under the present situation.

A substrate and a sealant layer each comprising the same material eliminate the need to separate the substrate from the sealant layer and can improve the recyclability.

A sealant layer comprising the same material as a polypropylene resin layer of a multilayer substrate, that is, polypropylene eliminates the need to separate collected packaging containers layer by layer and can improve the recyclability.

For a sealant layer comprising polypropylene, the polypropylene content of a barrier laminate is preferably 80% or more by mass, more preferably 90% or more by mass, still more preferably 95% or more by mass, of the total amount of resin materials in the barrier laminate. This can further improve the recyclability of a packaging container produced using a barrier laminate.

Each layer of the barrier laminate according to the first embodiment is described below.

### (Multilayer Substrate)

In the barrier laminate according to the first embodiment, the multilayer substrate includes at least a polypropylene resin layer and a surface surface coating layer.

### (Polypropylene Resin Layer)

The polypropylene resin layer comprises polypropylene. The polypropylene resin layer may have a monolayer structure or a multilayer structure.

A multilayer substrate with a layer comprising polypropylene can improve the oil resistance of a packaging container produced using the multilayer substrate.

The polypropylene resin layer is a film subjected to a stretching process. The stretching process may be uniaxial stretching or biaxial stretching.

The stretch ratio of the polypropylene resin layer in the machine direction (MD direction) and the transverse direction (TD direction) preferably ranges from 2 to 15, preferably 5 to 13.

A stretch ratio of 2 or more can further improve the strength and heat resistance of the polypropylene resin layer. This can also improve printability on the polypropylene resin layer.

The stretch ratio is preferably 15 or less in terms of the rupture limit of the polypropylene resin layer.

The polypropylene in the polypropylene resin layer may be any of a homopolymer, a random copolymer, and a block copolymer.

A polypropylene homopolymer is a polymer of propylene alone. A polypropylene random copolymer is a random copolymer of propylene and an α-olefin other than propylene (for example, ethylene, butene-1, 4-methyl-1-pentene, etc.). A polypropylene block copolymer is a copolymer with a polymer block composed of propylene and a polymer block composed of the α-olefin other than propylene.

Among these polypropylenes, a homopolymer or a random copolymer is preferably used in terms of transparency. When the rigidity and heat resistance of a packaging bag are regarded as important, a homopolymer is preferably used. When the impact resistance or the like of a packaging bag is regarded as important, a random copolymer is preferably used.

Biomass-derived polypropylene or mechanically or chemically recycled polypropylene can also be used.

The polypropylene content of the polypropylene resin layer is preferably 70% or more by mass, more preferably 80% or more by mass, still more preferably 90% or more by mass, still more preferably 95 or more.

The polypropylene resin layer may contain a resin material other than polypropylene without losing the features of the present invention. Examples of the resin material include polyolefins, such as polyethylene, (meth)acrylic resins, vinyl resins, cellulose resins, polyamide resins, polyesters, and ionomer resins.

The polypropylene resin layer may contain an additive agent without losing the features of the present invention. Examples of the additive agent include cross-linkers, antioxidants, anti-blocking agents, lubricant (slip) agents, ultraviolet absorbers, light stabilizers, fillers, reinforcing agents, antistatic agents, pigments, and modifying resins.

The polypropylene resin layer preferably has a thickness in the range of 10 to 50 µm, more preferably 10 to 40 µm.

The polypropylene resin layer with a thickness of 10 µm or more can further improve the strength and heat resistance of the multilayer substrate.

The polypropylene resin layer with a thickness of 50 µm or less can further improve the film-forming properties and processability of the multilayer substrate.

The polypropylene resin layer may have a print layer on its surface. Any image, such as a letter, a pattern, a symbol, or a combination thereof, may be formed on the print layer.

From the perspective of environmental load, the print layer is preferably formed on the substrate using a biomass-derived ink.

The print layer may be formed by any method, for example, a known printing method, such as a gravure printing method, an offset printing method, or a flexographic printing method. Among these, the flexographic printing method is preferred in terms of environmental load.

The polypropylene resin layer may be subjected to surface treatment. This can improve adhesiveness to the surface coating layer.

Any surface treatment method may be used, for example, physical treatment, such as corona discharge treatment, ozone treatment, low-temperature plasma treatment using oxygen gas and/or nitrogen gas, or glow discharge treatment, or chemical treatment, such as oxidation treatment using a chemical.

### (Surface Coating Layer)

The multilayer substrate includes a surface coating layer containing a resin material with a polar group on the polypropylene resin layer, and an evaporated film with high adhesiveness can be formed on the surface coating layer to improve gas barrier properties.

As described later, a packaging container produced using a barrier laminate including a surface coating layer has high laminate strength.

The surface coating layer contains a resin material with a polar group. The polar group refers to a group with at least one heteroatom, for example, an ester group, an epoxy group, a hydroxy group, an amino group, an amide group, a carboxy group, a carbonyl group, a carboxylic anhydride group, a sulfone group, a thiol group, or a halogen group.

Among these, from the perspective of the laminating properties of a packaging container, a carboxy group, a carbonyl group, an ester group, a hydroxy group, and an amino group are preferred, and a carboxy group and a hydroxy group are more preferred.

The resin material with a polar group is preferably an ethylene vinyl alcohol copolymer (EVOH), poly(vinyl alcohol) (PVA), a polyester, poly(ethylene imine), a (meth)acrylic resin with a hydroxy group, a polyamide, such as nylon 6, nylon 6,6, MXD nylon, or amorphous nylon, or a polyurethane, more preferably a polyamide, a (meth)acrylic resin with a hydroxy group, an ethylene vinyl alcohol copolymer, or poly(vinyl alcohol).

In one embodiment, the resin material with a polar group is preferably a (meth)acrylic resin with a hydroxy group, which can reduce the decrease in gas barrier properties due to heating, such as heat sealing, when a barrier laminate is used to produce a packaging product.

The use of such a resin material can significantly improve the adhesiveness of an evaporated film formed on a surface coating layer and can effectively improve gas barrier properties.

The surface coating layer can be formed using an aqueous emulsion or a solvent emulsion. Specific examples of the aqueous emulsion include polyamide emulsions, polyethylene emulsions, and polyurethane emulsions. Specific examples of the solvent emulsion include polyester emulsions.

The amount of the resin material with a polar group in the surface coating layer is preferably 70% or more by mass, more preferably 80% or more by mass, still more preferably 90% or more by mass.

The surface coating layer may contain a resin material other than the resin material with a polar group without losing the features of the present invention.

The surface coating layer may contain an additive agent without losing the features of the present invention. Examples of the additive agent include cross-linkers, antioxidants, anti-blocking agents, lubricant (slip) agents, ultraviolet absorbers, light stabilizers, fillers, reinforcing agents, antistatic agents, pigments, and modifying resins.

The surface coating layer preferably has a thickness in the range of 0.08% to 20%, more preferably 0.2% to 20%, still more preferably 1% to 20%, still more preferably 3% to 10%, of the total thickness of the multilayer substrate.

The surface coating layer with a thickness of 0.08% or more of the total thickness of the multilayer substrate can further improve the adhesiveness of an evaporated film and can further improve gas barrier properties. This can also further improve the laminate strength of a packaging container.

The surface coating layer with a thickness of 20% or less of the total thickness of the multilayer substrate can further improve the processability of the multilayer substrate. As described later, this can improve the recyclability of a packaging container produced using a laminate of the barrier laminate according to the first embodiment and a sealant layer formed of polypropylene.

The surface coating layer preferably has a thickness in the range of 0.02 to 10 µm, more preferably 0.05 to 10 µm, still more preferably 0.1 to 10 µm, still more preferably 0.2 to 5 µm.

The surface coating layer with a thickness of 0.02 µm or more can further improve the adhesiveness of an evaporated film and can further improve gas barrier properties. This can also further improve the laminate strength of a packaging container.

The surface coating layer with a thickness of 10 µm or less can further improve the processability of the multilayer substrate. As described later, this can also improve the recyclability of a packaging container produced using a laminate of the barrier laminate according to the first embodiment and a sealant layer formed of polypropylene.

A multilayer substrate can be produced off-line. More specifically, a multilayer substrate can be produced by forming a resin film of a resin composition containing polypropylene by a T-die method, an inflation method, or the like, stretching the resin film, applying a coating liquid for forming a coat to the resin film, and drying the coating liquid.

A multilayer substrate can also be produced in-line, more specifically, by forming a resin film of a resin composition containing polypropylene by a T-die method, an inflation method, or the like, stretching the resin film in the machine direction (MD direction), applying a coating liquid for forming a coat to the resin film, drying the coating liquid, and stretching the resin film in the transverse direction (TD direction). The stretching in the transverse direction may be performed first.

### (Evaporated Film)

The barrier laminate according to the first embodiment includes the evaporated film comprising an inorganic oxide on the surface coating layer. This can improve the gas barrier properties, more specifically, oxygen barrier properties and moisture barrier properties, of the barrier laminate. Furthermore, a packaging container produced using the barrier laminate can reduce the mass loss of the contents of the packaging container.

Examples of the inorganic oxide include aluminum oxide (alumina), silicon oxide (silica), magnesium oxide, calcium oxide, zirconium oxide, titanium oxide, boron oxide, hafnium oxide, barium oxide, and silicon carbide oxide (silicon oxide containing carbon).

Among these, silica, silicon carbide oxide, and alumina are preferred.

In one embodiment, the inorganic oxide is more preferably silica because aging after the evaporated film is formed is not necessary.

In one embodiment, the inorganic oxide is more preferably silicon oxide containing carbon because even bending the barrier laminate causes a smaller decrease in gas barrier properties.

The evaporated film preferably has a thickness in the range of 1 to 150 nm, more preferably 5 to 60 nm, still more preferably 10 to 40 nm.

The evaporated film with a thickness of 1 nm or more can further improve the oxygen barrier properties and moisture barrier properties of the barrier laminate.

The evaporated film with a thickness of 150 nm or less can prevent cracking in the evaporated film. As described later, this can also improve the recyclability of a packaging container produced using a laminate of the barrier laminate and a sealant layer formed of polypropylene.

The evaporated film can be formed by a known method, for example, a physical vapor deposition method (PVD method), such as a vacuum evaporation method, a sputtering method, or an ion plating method, or a chemical vapor deposition method (CVD method), such as a plasma chemical vapor deposition method, a thermal chemical vapor deposition method, or a photochemical vapor deposition method.

The evaporated film may be monolayer formed by a single evaporation process or multilayer formed by a plurality of evaporation processes. Each layer of multiple layers may be formed of the same material or different materials. Each layer may be formed by the same method or by different methods.

An apparatus used for a method of forming an evaporated film by a PVD method can be a vacuum film-forming apparatus with plasma assistance.

One embodiment of a method of forming an evaporated film using a vacuum film-forming apparatus with plasma assistance is described below.

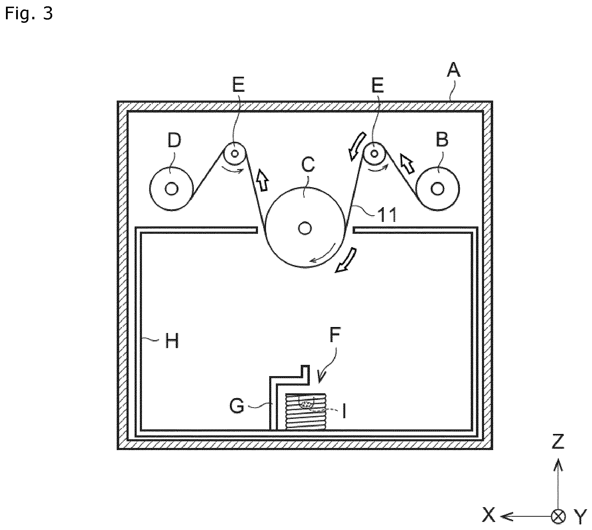

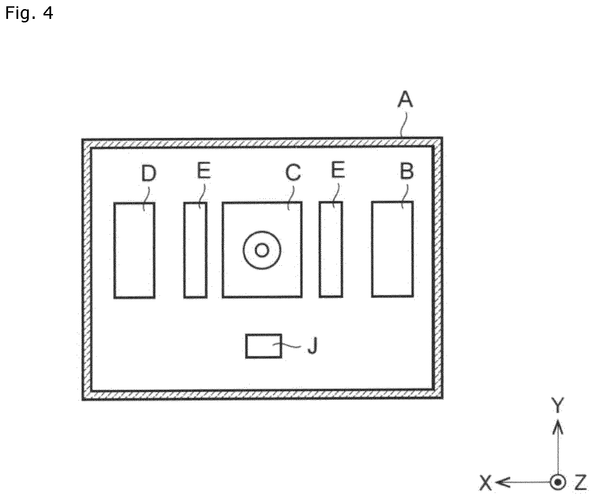

In one embodiment, as illustrated in Figs. 3 and 4, a vacuum film-forming apparatus includes a vacuum chamber A, an unwinder B, a film-forming drum C, a winder D, a feed roller E, an evaporation source F, a reaction gas supply unit G, an anti-deposition box H, a deposition material I, and a plasma gun J.

Fig. 3 is a schematic cross-sectional view of the vacuum film-forming apparatus in the XZ plane direction. Fig. 4 is a schematic cross-sectional view of the vacuum film-forming apparatus in the XY plane direction.

As illustrated in Fig. 3, the multilayer substrate 11 wound by the film-forming drum C is placed in an upper portion of the vacuum chamber A with the surface coating layer thereof facing downward, and the anti-deposition box H electrically grounded is located below the film-forming drum C in the vacuum chamber A. The evaporation source F is located at the bottom of the anti-deposition box H. The film-forming drum C is placed in the vacuum chamber A such that a surface of the surface coating layer of the multilayer substrate 11 wound by the film-forming drum C faces the upper surface of the evaporation source F with a predetermined distance therebetween.

The feed roller E is placed between the unwinder B and the film-forming drum C and between the film-forming drum C and the winder D.

The vacuum chamber is coupled to a vacuum pump (not shown).

The evaporation source F holds the deposition material I and has a heater (not shown).

The reaction gas supply unit G is a portion for supplying a reactant gas (oxygen, nitrogen, helium, argon, a gas mixture thereof, etc.) that reacts with the evaporated deposition material.

The deposition material I heated and evaporated from the evaporation source F is diffused toward the surface coating layer of the multilayer substrate 11, and simultaneously the surface coating layer is irradiated with plasma from the plasma gun J. Thus, an evaporated film is formed.

Details of this formation method are disclosed in Japanese Unexamined Patent Application Publication No. 2011-214089.

A plasma generator for use in the plasma chemical vapor deposition method may be a high-frequency plasma, pulse wave plasma, or microwave plasma generator. An apparatus with two or more film-forming chambers may also be used. Such an apparatus preferably has a vacuum pump to maintain a vacuum in each film-forming chamber.

The degree of vacuum in each film-forming chamber preferably ranges from 1 x 10 to 1 x 10⁻⁶ Pa.

One embodiment of a method of forming an evaporated film using a plasma generator is described below.

First, a multilayer substrate is sent to a film-forming chamber and is transported via an auxiliary roller onto a cooling/electrode drum at a predetermined speed.

Subsequently, a gas mixture composition that contains a film-forming monomer gas containing an inorganic oxide, an oxygen gas, an inert gas, and the like is supplied from a gas supply unit into a film-forming chamber, plasma is generated by glow discharge on a surface coating layer, and the surface coating layer is irradiated with the plasma. Thus, an evaporated film containing the inorganic oxide is formed on the surface coating layer.

Details of this formation method are disclosed in Japanese Unexamined Patent Application Publication No. 2012-076292.

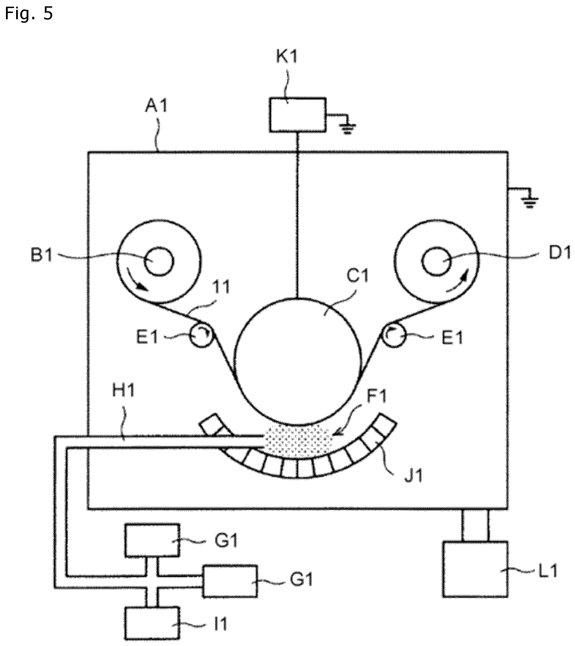

Fig. 5 is a schematic view of a plasma chemical vapor deposition apparatus for use in the CVD method.

In one embodiment, in the plasma chemical vapor deposition apparatus illustrated in Fig. 5, the multilayer substrate 11 is sent from an unwinder B1 in a vacuum chamber A1 and is transported onto the surface of a cooling/electrode drum C1 at a predetermined speed via a feed roller E1. Oxygen, nitrogen, helium, argon, and a gas mixture thereof are supplied from a reaction gas supply unit G1, and a film-forming monomer gas and the like are supplied from a raw material gas supply unit I1, thereby adjusting a gas mixture composition for evaporation composed thereof. The gas mixture composition for evaporation is introduced into the vacuum chamber A1 through a raw material supply nozzle H1. The surface coating layer of the multilayer substrate 11 transported onto the surface of the cooling/electrode drum C1 is irradiated with plasma generated by glow discharge plasma F1 to form an evaporated film. At that time, predetermined electric power from a power supply K1 located outside the vacuum chamber A1 is applied to the cooling/electrode drum C1, and a magnet J1 located near the cooling/electrode drum C1 promotes the generation of plasma. After the evaporated film is formed, the multilayer substrate 11 is then wound by the winder D1 via the feed roller E1 at a predetermined winding speed. In the figure, L1 denotes a vacuum pump.

An apparatus for use in a method of forming an evaporated film may be a continuous evaporated-film-forming apparatus with a plasma pretreatment chamber and a film-forming chamber.

One embodiment of a method of forming an evaporated film using the apparatus is described below.

First, in the plasma pretreatment chamber, a surface coating layer of a barrier laminate is irradiated with plasma from a plasma supply nozzle. In the film-forming chamber, an evaporated film is then formed on the plasma-treated surface coating layer.

Details of this formation method are disclosed in International Publication No. WO 2019/087960.

The surface of the evaporated film is preferably subjected to the surface treatment. This can improve adhesiveness to an adjacent layer.

In a barrier laminate, the evaporated film is preferably an evaporated film formed by the CVD method, more preferably an evaporated film of silicon oxide containing carbon formed by the CVD method. This can reduce the decrease in gas barrier properties even when the barrier laminate is bent.

The evaporated film of silicon oxide containing carbon contains silicon, oxygen, and carbon. The carbon content C of the evaporated film of silicon oxide containing carbon preferably ranges from 3% to 50%, more preferably 5% to 40%, still more preferably 10% to 35%, of the total (100%) of three elements of silicon, oxygen, and carbon.

In the evaporated film of silicon oxide containing carbon, a carbon content C in such a range can result in a smaller decrease in gas barrier properties even when the barrier laminate is bent.

In the present description, each element content is on a molar basis.

In one embodiment of the evaporated film of silicon oxide containing carbon, the silicon content Si preferably ranges from 1% to 45%, more preferably 3% to 38%, still more preferably 8% to 33%, of the total (100%) of three elements of silicon, oxygen, and carbon. The oxygen content O preferably ranges from 10% to 70%, more preferably 20% to 65%, still more preferably 25% to 60%, of the total (100%) of three elements of silicon, oxygen, and carbon.

In the evaporated film of silicon oxide containing carbon, a silicon content Si and an oxygen content O in such a range can result in a much smaller decrease in gas barrier properties even when the barrier laminate is bent.

In one embodiment of the evaporated film of silicon oxide containing carbon, the oxygen content O is preferably higher than the carbon content C, and the silicon content Si is preferably lower than the carbon content C. The oxygen content O is preferably higher than the silicon content Si. Thus, the content O, the content C, and the content Si in the order of content from highest to lowest are preferred. This can further reduce the decrease in gas barrier properties even when the barrier laminate is bent.

The C content, the Si content, and the O content of the evaporated film of silicon oxide containing carbon can be measured by X-ray photoelectron spectroscopy (XPS) and narrow scan analysis under the following measurement conditions.

### (Measurement Conditions)

Equipment used: "ESCA-3400" (manufactured by Kratos)
[1] Spectrum Sampling Conditions
   Incident X-rays: MgKα (monochromatic X-rays, hv = 1253.6 eV) X-ray output: 150 W (10 kV, 15 mA)
   X-ray scan area (measurement region): approximately 6 mmϕ Photoelectron acceptance angle: 90 degrees
[2] Ion Sputtering Conditions
   Ionic species: Ar⁺
   Accelerating voltage: 0.2 (kV)
   Emission current: 20 (mA)
   Etching range: 10 mmϕ
   Ion sputtering time: 30 seconds to take a spectrum

### (Barrier Coating Layer)

The barrier laminate according to the first embodiment can further include a barrier coating layer between the evaporated film and the sealant layer. This can improve the oxygen barrier properties and moisture barrier properties of the barrier laminate.

In one embodiment, the barrier coating layer contains a gas barrier resin, such as an ethylene-vinyl alcohol copolymer (EVOH), poly(vinyl alcohol) (PVA), polyacrylonitrile, a polyamide, such as nylon 6, nylon 6,6, or poly(m-xylylene adipamide) (MXD6), a polyester, a polyurethane, or a (meth)acrylic resin. Among these, poly(vinyl alcohol) is preferred in terms of oxygen barrier properties and moisture barrier properties.

Poly(vinyl alcohol) in the barrier coating layer can effectively prevent cracking in the evaporated film.

The gas barrier resin content of the barrier coating layer preferably ranges from 50% to 95% by mass, more preferably 75% to 90% by mass. The barrier coating layer with a gas barrier resin content of 50% or more by mass can have further improved oxygen barrier properties and moisture barrier properties.

The barrier coating layer may contain the additive agent without losing the features of the present invention.

The barrier coating layer preferably has a thickness in the range of 0.01 to 10 µm, more preferably 0.1 to 5 µm.

The barrier coating layer with a thickness of 0.01 µm or more can further improve the oxygen barrier properties and moisture barrier properties of the barrier laminate. The barrier coating layer with a thickness of 10 µm or less can improve the processability of the barrier laminate. This can also improve the recyclability of a packaging container produced using a laminate of the barrier laminate and a sealant layer formed of polypropylene.

The barrier coating layer can be formed by dissolving or dispersing the gas barrier resin in water or an appropriate solvent and applying and drying the solution or dispersion. The barrier coating layer can also be formed by applying and drying a commercial barrier coating agent.

In another embodiment, the barrier coating layer is a gas barrier coating film containing at least one resin composition, such as a hydrolysate of a metal alkoxide or a hydrolytic condensate of a metal alkoxide, which is produced by polycondensation of a mixture of the metal alkoxide and a water-soluble polymer by a sol-gel method in the presence of a sol-gel method catalyst, water, an organic solvent, and the like.

Such a barrier coating layer on the evaporated film can effectively prevent cracking in the evaporated film.

In one embodiment, the metal alkoxide is represented by the following general formula.

R¹ₙM(OR²)ₘ

(R¹ and R² independently denote an organic group having 1 to 8 carbon atoms, M denotes a metal atom, n denotes an integer of 0 or more, m denotes an integer of 1 or more, and n + m denotes the valence of M.)

The metal atom M may be silicon, zirconium, titanium, or aluminum, for example.

Examples of the organic groups represented by R¹ and R² include alkyl groups, such as a methyl group, an ethyl group, a n-propyl group, an i-propyl group, a n-butyl group, and an i-butyl group.

Examples of the metal alkoxide that satisfies the general formula include tetramethoxysilane (Si(OCH₃)₄), tetraethoxysilane (Si(OC₂H₅)₄), tetrapropoxysilane (Si(OC₃H₇)₄), and tetrabutoxysilane (Si(OC₄H₉)₄).

The metal alkoxide is preferably used together with a silane coupling agent.

The silane coupling agent may be a known organoalkoxysilane with an organic reactive group and is particularly preferably an organoalkoxysilane with an epoxy group. Examples of the organoalkoxysilane with an epoxy group include γ-glycidoxypropyltrimethoxysilane, γ-glycidoxypropylmethyldiethoxysilane, and β-(3,4-epoxycyclohexyl)ethyltrimethoxysilane.

Two or more of such silane coupling agents may be used. The silane coupling agent is preferably used in the range of approximately 1 to 20 parts by mass per 100 parts by mass of the metal alkoxide in total.

The water-soluble polymer is preferably poly(vinyl alcohol) or an ethylene-vinyl alcohol copolymer, and poly(vinyl alcohol) and the ethylene-vinyl alcohol copolymer are preferably used in combination in terms of oxygen barrier properties, moisture barrier properties, water resistance, and weatherability.

The water-soluble polymer content of the gas barrier coating film preferably ranges from 5 to 500 parts by mass per 100 parts by mass of the metal alkoxide.

The gas barrier coating film with a water-soluble polymer content of 5 parts or more by mass per 100 parts by mass of the metal alkoxide can further improve the oxygen barrier properties and moisture barrier properties of the barrier laminate. The gas barrier coating film with a water-soluble polymer content of 500 parts or less by mass per 100 parts by mass of the metal alkoxide can have improved film-forming properties.

In the gas barrier coating film, the ratio of the metal alkoxide to the water-soluble polymer (metal alkoxide/water-soluble polymer) is preferably 4.5 or less, more preferably 1.0 to 4.5, still more preferably 1.7 to 3.5, based on mass.

When the ratio of the metal alkoxide to the water-soluble polymer is 4.5 or less, even bending the barrier laminate causes a smaller decrease in gas barrier properties.

When the ratio of the metal alkoxide to the water-soluble polymer is 1.0 or more, even heating, such as heat sealing, causes a smaller decrease in gas barrier properties when the barrier laminate is used to produce a packaging product.

These ratios are solid content ratios.

The ratio of silicon atoms to carbon atoms (Si/C) on the surface of the gas barrier coating film measured by X-ray photoelectron spectroscopy (XPS) is preferably 1.60 or less, more preferably 0.50 to 1.60, still more preferably 0.90 to 1.35.

When the ratio of silicon atoms to carbon atoms is 1.60 or less, even bending the barrier laminate causes a smaller decrease in gas barrier properties.

When the ratio of silicon atoms to carbon atoms is 0.50 or more, even heating, such as heat sealing, causes a smaller decrease in gas barrier properties when the barrier laminate is used to produce a packaging product.

A ratio of silicon atoms to carbon atoms in such a range can be achieved by appropriately adjusting the ratio of the metal alkoxide to the water-soluble polymer.

In the present description, the ratio of silicon atoms to carbon atoms is on a molar basis.

The ratio of silicon atoms to carbon atoms by X-ray photoelectron spectroscopy (XPS) can be measured by narrow scan analysis under the following measurement conditions.

### (Measurement Conditions)

Equipment used: "ESCA-3400" (manufactured by Kratos)
[1] Spectrum Sampling Conditions
   Incident X-rays: MgKα (monochromatic X-rays, hv = 1253.6 eV)
   X-ray output: 150 W (10 kV, 15 mA)
   X-ray scan area (measurement region): approximately 6 mmϕ
   Photoelectron acceptance angle: 90 degrees
[2] Ion Sputtering Conditions
   Ionic species: Ar⁺
   Accelerating voltage: 0.2 (kV)
   Emission current: 20 (mA)
   Etching range: 10 mmϕ
   Ion sputtering time: 30 seconds + 30 seconds + 60 seconds (120 seconds in total) to take a spectrum

The gas barrier coating film preferably has a thickness in the range of 0.01 to 100 µm, more preferably 0.1 to 50 µm. This can further improve the oxygen barrier properties and moisture barrier properties while maintaining recyclability.

The gas barrier coating film with a thickness of 0.01 µm or more can improve the oxygen barrier properties and moisture barrier properties of the barrier laminate. Such a gas barrier coating film can also prevent cracking in the evaporated film.

The gas barrier coating film with a thickness of 100 µm or less can improve the recyclability of a packaging container produced using a laminate of the barrier laminate and a sealant layer formed of polypropylene.

The gas barrier coating film can be formed by applying a composition containing the above materials by a known means, for example, by roll coating with a gravure roll coater, by spray coating, by spin coating, by dipping, with a brush, with a bar code, or with an applicator, and performing polycondensation of the composition by a sol-gel method.

An acid or an amine compound is suitable for a sol-gel method catalyst. The amine compound is preferably a tertiary amine that is substantially insoluble in water and that is soluble in an organic solvent, for example, N,N-dimethylbenzylamine, tripropylamine, tributylamine, or tripentylamine. Among these, N,N-dimethylbenzylamine is preferred.

The sol-gel method catalyst is preferably used in the range of 0.01 to 1.0 parts by mass, more preferably 0.03 to 0.3 parts by mass, per 100 parts by mass of the metal alkoxide.

When the amount of the sol-gel method catalyst used is 0.01 parts or more by mass per 100 parts by mass of the metal alkoxide, the sol-gel method catalyst can have improved catalytic effects. When the amount of the sol-gel method catalyst used is 1.0 part or less by mass per 100 parts by mass of the metal alkoxide, a gas barrier coating film formed can have a uniform thickness.

The composition may further contain an acid. An acid is used as a catalyst for the sol-gel method, mainly as a catalyst for the hydrolysis of a metal alkoxide, a silane coupling agent, or the like.

Examples of the acid include mineral acids, such as sulfuric acid, hydrochloric acid, and nitric acid, and organic acids, such as acetic acid and tartaric acid. The amount of the acid used preferably ranges from 0.001 to 0.05 mol with respect to the total number of moles of the metal alkoxide and the alkoxide moiety (for example, the silicate moiety) of the silane coupling agent.

When the amount of the acid used is 0.001 mol or more with respect to the total number of moles of the metal alkoxide and the alkoxide moiety (for example, the silicate moiety) of the silane coupling agent, the catalytic effects can be improved. When the amount of the acid used is 0.05 mol or less with respect to the total number of moles of the metal alkoxide and the alkoxide moiety (for example, the silicate moiety) of the silane coupling agent, a gas barrier coating film formed can have a uniform thickness.

The composition preferably contains 0.1 to 100 mol, more preferably 0.8 to 2 mol, of water per mole of the metal alkoxide in total.

When the water content is 0.1 mol or more per mole of the metal alkoxide in total, the barrier laminate can have improved oxygen barrier properties and moisture barrier properties. When the water content is 100 mol or less per mole of the metal alkoxide in total, the hydrolysis reaction can be promoted.

The composition may contain an organic solvent. Examples of the organic solvent include methyl alcohol, ethyl alcohol, n-propyl alcohol, isopropyl alcohol, and n-butanol.

One embodiment of a method of forming a gas barrier coating film is described below.

First, a metal alkoxide, a water-soluble polymer, a sol-gel method catalyst, water, an organic solvent, and, if necessary, a silane coupling agent are mixed to prepare a composition. A polycondensation reaction progresses gradually in the composition.

The composition is then applied to the evaporated film and is dried by the known method described above. The drying further promotes the polycondensation reaction of the metal alkoxide and the water-soluble polymer (and the silane coupling agent when the composition contains the silane coupling agent), thus forming a layer of a composite polymer.

Finally, the composition can be heated in the temperature range of, for example, 20°C to 250°C, preferably 50°C to 220°C, for 1 second to 10 minutes to form a gas barrier coating film.

A print layer may be formed on the surface of the barrier coating layer. The method of forming the print layer is described above.

### (Sealant Layer)

In one embodiment, the sealant layer contains a resin material that can be fused together by heat.

Examples of the resin material that can be fused together by heat include polyolefins, such as polyethylene, polypropylene, polybutene, methylpentene polymers, and cyclic olefin copolymers. Specific examples include low-density polyethylene (LDPE), medium-density polyethylene (MDPE), high-density polyethylene (HDPE), straight-chain (linear) low-density polyethylene (LLDPE), ethylene/α-olefin copolymers polymerized using a metallocene catalyst, and ethylene-propylene copolymers, such as random and block copolymers of ethylene and propylene.

Examples of the resin material that can be fused together by heat also include ethylene-vinyl acetate copolymers (EVA), ethylene-acrylic acid copolymers (EAA), ethylene-ethyl acrylate copolymers (EEA), ethylene-methacrylic acid copolymers (EMAA), ethylene-methyl methacrylate copolymers (EMMA), ionomer resins, heat-sealing ethylene-vinyl alcohol resins, acid-modified polyolefins produced by modifying polyolefins with an unsaturated carboxylic acid, such as acrylic acid, methacrylic acid, maleic acid, maleic anhydride, fumaric acid, itaconic acid, or the like, polyesters, such as poly(ethylene terephthalate) (PET), poly(vinyl acetate) resins, poly(meth)acrylic resins, and poly(vinyl chloride) resins.

Laminates of a substrate and a sealant layer comprising different resin materials have been used to produce packaging containers. After used packaging containers are collected, however, it is difficult to separate the substrate from the sealant layer, and therefore the used packaging containers are not actively recycled under the present situation.

A substrate and a sealant layer each comprising the same material eliminate the need to separate the substrate from the sealant layer and can improve the recyclability. Thus, the sealant layer preferably comprises polypropylene among the resin materials described above in terms of the recyclability of a packaging container produced using the barrier laminate.

The sealant layer comprising polypropylene can improve the oil resistance of a packaging container produced using the barrier laminate.

The sealant layer may contain the heat seal modifier and the additive agent without losing the features of the present invention.

The sealant layer may have a monolayer structure or a multilayer structure.

The sealant layer preferably has a thickness in the range of 15 to 100 µm, more preferably 20 to 70 µm.

The sealant layer with a thickness of 15 µm or more can further improve the laminate strength of a packaging container with the barrier laminate.

The sealant layer with a thickness of 100 µm or less can further improve the processability of the barrier laminate.

The sealant layer may be formed by laminating a heat-sealing stretched or unstretched film via a known adhesive or may be formed by applying and drying a heat sealing agent.

### (Adhesive Layer)

The barrier laminate according to the first embodiment includes an adhesive layer between the evaporated film and the sealant layer.

The adhesive layer contains at least one adhesive, which may be a one-component, two-component, or non-curable adhesive. The adhesive may be a solvent-free adhesive or a solvent adhesive and is preferably a solvent-free adhesive in terms of environmental load.

Examples of the solvent-free adhesive include polyether adhesives, polyester adhesives, silicone adhesives, epoxy adhesives, and urethane adhesives. Among these, two-component urethane adhesives can be preferably used.

Examples of the solvent adhesive include rubber adhesives, vinyl adhesives, silicone adhesives, epoxy adhesives, phenolic adhesives, and olefin adhesives.

The adhesive layer may have any thickness, for example, in the range of 0.1 to 10 µm.

### (Intermediate Layer)

In one embodiment, the barrier laminate according to the first embodiment includes an intermediate layer between the evaporated film and the sealant layer. This can provide the barrier laminate with resilience and can improve the strength of the barrier laminate.

The intermediate layer contains a resin material. Examples of the resin material in the intermediate layer include polyolefins, vinyl resins, polyesters, (meth)acrylic resins, and cellulose resins. Among these, polypropylene is particularly preferred in terms of the recyclability of the barrier laminate.

The intermediate layer may contain the additive agent without losing the features of the present invention.

The intermediate layer may have the evaporated film or the barrier coating layer on its surface.

The intermediate layer is preferably composed of a resin film comprising the resin material, and the resin film is preferably subjected to a stretching process in terms of strength. The stretching process may be uniaxial stretching or biaxial stretching.

The intermediate layer preferably has a thickness in the range of 10 to 50 µm, more preferably 10 to 40 µm.

The intermediate layer with a thickness of 10 µm or more can further improve the strength of the barrier laminate.

A polypropylene resin layer with a thickness of 50 µm or less can further improve the processability of the barrier laminate.

The intermediate layer may be provided via the adhesive layer.

### (Multilayer Substrate according to Second Embodiment)

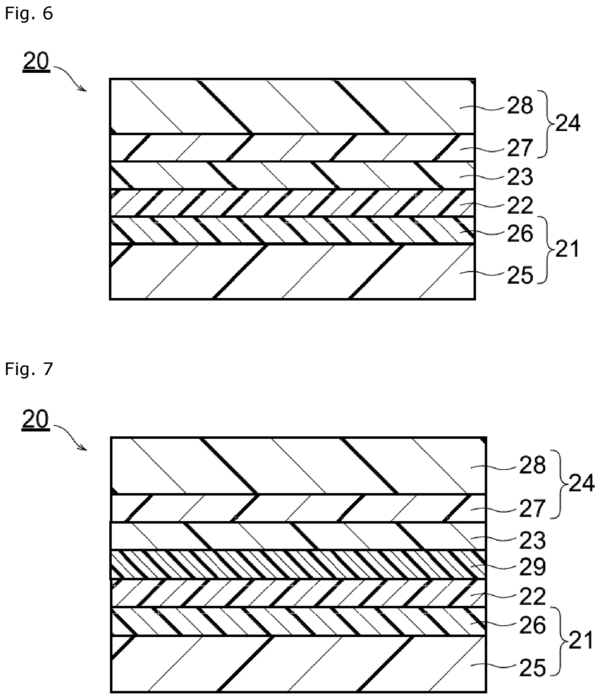

Figs. 6 and 7 are schematic cross-sectional views of an embodiment of the barrier laminate according to the second embodiment. As illustrated in Fig. 6, the barrier laminate 20 according to the second embodiment includes a multilayer substrate 21, a first evaporated film 22, an adhesive layer 23, and a sealant layer 24. The multilayer substrate 21 includes at least a polypropylene resin layer 25 and a surface coating layer 26. The sealant layer 24 includes a second evaporated film 27 and a sealant substrate 28.

In one embodiment, as illustrated in Fig. 7, the barrier laminate 20 according to the second embodiment further includes a barrier coating layer 29 between the first evaporated film 22 and the adhesive layer 23.

In one embodiment, the barrier laminate according to the second embodiment includes an intermediate layer (not shown) between the adhesive layer and the sealant layer.

In the barrier laminate according to the second embodiment, the laminate strength between the multilayer substrate and the evaporated film at a width of 15 mm is preferably 3 N or more, more preferably 4 N or more, still more preferably 5.5 N or more. The upper limit of the laminate strength of the barrier laminate according to the second embodiment may be 20 N or less.

Laminates of a substrate and a sealant layer comprising different resin materials have been used to produce packaging containers. After used packaging containers are collected, however, it is difficult to separate the substrate from the sealant layer, and therefore the used packaging containers are not actively recycled under the present situation.

A substrate and a sealant layer each comprising the same material eliminate the need to separate the substrate from the sealant layer and can improve the recyclability.

A sealant substrate comprising the same material as a polypropylene resin layer of a multilayer substrate, that is, polypropylene eliminates the need to separate collected packaging containers layer by layer and can improve the recyclability.

For a sealant layer comprising polypropylene, the polypropylene content of a barrier laminate is preferably 80% or more by mass, more preferably 90% or more by mass, still more preferably 95% or more by mass, of the total amount of resin materials in the barrier laminate. This can further improve the recyclability of a packaging container produced using a barrier laminate.

Each layer of the barrier laminate according to the second embodiment is described below.

### (Multilayer Substrate, Barrier Coating Layer, Intermediate Layer)

The multilayer substrate, the barrier coating layer, and the intermediate layer of the barrier laminate according to the second embodiment may be the same as the multilayer substrate, the barrier coating layer, and the intermediate layer of the barrier laminate according to the first embodiment.

### (First Evaporated Film)

The first evaporated film of the barrier laminate according to the second embodiment may be the same as the evaporated film of the barrier laminate according to the first embodiment.

### (Adhesive Layer)

The barrier laminate according to the second embodiment includes an adhesive layer between the evaporated film or the barrier coating layer and the sealant layer. The adhesive layer is adjacent to the second evaporated film of the sealant layer.

The adhesive layer contains at least one adhesive. The adhesive may be a one-component, two-component, or non-curable adhesive. The adhesive may be a solvent-free adhesive or a solvent adhesive and is preferably a solvent-free adhesive in terms of environmental load.

Examples of the solvent-free adhesive include polyether adhesives, polyester adhesives, silicone adhesives, epoxy adhesives, and urethane adhesives. Among these, two-component urethane adhesives are preferred.

Examples of the solvent adhesive include rubber adhesives, vinyl adhesives, silicone adhesives, epoxy adhesives, phenolic adhesives, and olefin adhesives.

When the sealant layer includes an aluminum evaporated film as the second evaporated film, the adhesive layer is preferably an adhesive agent layer containing a cured product of a composition containing a polyester polyol and an isocyanate compound.

The adhesive layer with such a structure can further improve the oxygen barrier properties and moisture barrier properties of the barrier laminate.

When a laminate including an evaporated film is applied to a packaging container, in general, the laminate is under a bending load caused by a forming machine or the like, and the evaporated film may have a crack or the like. The use of an adhesive containing a cured product of a composition containing a polyester polyol and an isocyanate compound can improve the bending load resistance of the barrier laminate and can reduce the decrease in the oxygen barrier properties and moisture barrier properties.

The cured product of a composition containing a polyester polyol and an isocyanate compound preferably has a glass transition temperature in the range of -30°C to 80°C, more preferably 0°C to 70°C, still more preferably 25°C to 70°C. This can further improve the oxygen barrier properties, moisture barrier properties, and laminate strength of the barrier laminate.

In the present description, Tg is determined by differential scanning calorimetry (DSC) in accordance with JIS K 7121: 2012.

The polyester polyol has two or more hydroxy groups per molecule as functional groups. The isocyanate compound has two or more isocyanate groups per molecule as functional groups. The polyester polyol has, as a main backbone, a polyester structure or a polyester polyurethane structure, for example.

Specific examples of the composition (adhesive) containing a polyester polyol and an isocyanate compound include PASLIM series available from DIC Corporation.

The composition containing the polyester polyol and the isocyanate compound may further contain a phosphate, a plate-like inorganic compound, a coupling agent, a cyclodextrin and/or a derivative thereof, or the like.

The polyester polyol having two or more hydroxy groups per molecule as functional groups can be the following [First Example] to [Third Example], for example.
[First Example] A polyester polyol produced by polycondensation of an ortho-directing polycarboxylic acid or an anhydride thereof and a polyhydric alcohol
[Second Example] A polyester polyol with a glycerol backbone
[Third Example] A polyester polyol with an isocyanurate ring Each polyester polyol is described below.

The polyester polyol according to the first example is a polycondensate produced by polycondensation of a polycarboxylic acid component containing at least one orthophthalic acid and anhydride thereof and a polyhydric alcohol component.

In particular, the polyester polyol preferably contains 70% to 100% by mass of orthophthalic acid and an anhydride thereof with respect to the total polycarboxylic acid.

Although the polyester polyol according to the first example essentially requires orthophthalic acid and an anhydride thereof as the polycarboxylic acid component, another polycarboxylic acid component may be copolymerized without losing the advantages of the present embodiment.

Examples of the other polycarboxylic acid component include aliphatic polycarboxylic acids, such as succinic acid, adipic acid, azelaic acid, sebacic acid and dodecanedicarboxylic acid; polycarboxylic acids with an unsaturated bond, such as maleic anhydride, maleic acid, and fumaric acid; alicyclic polycarboxylic acids, such as 1,3-cyclopentanedicarboxylic acid and 1,4-cyclohexanedicarboxylic acid; aromatic polycarboxylic acids, such as terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, anhydrides of these dicarboxylic acids, and ester-forming derivatives of these dicarboxylic acids; and polybasic acids such as p-hydroxybenzoic acid, p-(2-hydroxyethoxy)benzoic acid, and ester-forming derivatives of these dihydroxy carboxylic acids. Among these, succinic acid, 1,3-cyclopentanedicarboxylic acid, and isophthalic acid are preferred.

Two or more of the other polycarboxylic acids may be used.

Examples of the polyhydric alcohol component include aliphatic polyhydric alcohols and aromatic polyhydric alcohols.

Examples of the aliphatic polyhydric alcohols include ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol.

Examples of the aromatic polyhydric alcohols include hydroquinone, resorcinol, catechol, naphthalenediol, biphenol, bisphenol A, bisphenol F, tetramethylbiphenol, and ethylene oxide adducts thereof and hydrogenated aliphatic compounds thereof.

In one embodiment, the polyhydric alcohol component includes at least one selected from the group consisting of ethylene glycol, propylene glycol, butylene glycol, neopentyl glycol, and cyclohexanedimethanol.

The polyester polyol according to the second example may be a polyester polyol with a glycerol backbone represented by the general formula (1).

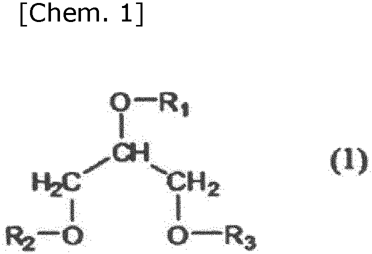

In the general formula (1), R₁, R₂, and R₃ independently denote a hydrogen atom (H) or a group represented by the following general formula (2).

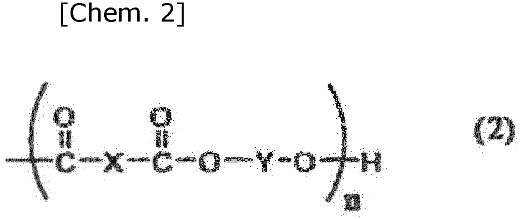

In the formula (2), n denotes an integer in the range of 1 to 5, X denotes an arylene group selected from the group consisting of an optionally substituted 1,2-phenylene group, an optionally substituted 1,2-naphthylene group, an optionally substituted 2,3-naphthylene group, an optionally substituted 2,3-anthraquinonediyl group, and an optionally substituted 2,3-anthracenediyl group, and Y denotes an alkylene group having 2 to 6 carbon atoms.

At least one of R₁, R₂, and R₃ denotes a group represented by the general formula (2).

In the general formula (1), at least one of R₁, R₂, and R₃ must be a group represented by the general formula (2). In particular, all of R₁, R₂, and R₃ are preferably groups represented by the general formula (2).

Two or more of a compound in which one of R₁, R₂, and R₃ is a group represented by the general formula (2), a compound in which two of R₁, R₂, and R₃ are groups represented by the general formula (2), and a compound in which all of R₁, R₂, and R₃ are groups represented by the general formula (2) may be mixed.

X denotes an arylene group that is selected from the group consisting of a 1,2-phenylene group, a 1,2-naphthylene group, a 2,3-naphthylene group, a 2,3-anthraquinonediyl group, and a 2,3-anthracenediyl group and that may have a substituent.

When X is substituted with a substituent, X may be substituted with one or more substituents, and the substituents are bonded to any carbon atom that is different from a free radical on X. The substituent may be a chloro group, a bromo group, a methyl group, an ethyl group, an i-propyl group, a hydroxy group, a methoxy group, an ethoxy group, a phenoxy group, a methylthio group, a phenylthio group, a cyano group, a nitro group, an amino group, a phthalimide group, a carboxy group, a carbamoyl group, an N-ethylcarbamoyl group, a phenyl group, or a naphthyl group.

In the general formula (2), Y denotes an alkylene group having 2 to 6 carbon atoms, such as an ethylene group, a propylene group, a butylene group, a neopentylene group, a 1,5-pentylene group, a 3-methyl-1,5-pentylene group, a 1,6-hexylene group, a methylpentylene group, or a dimethylbutylene group. Among these, Y preferably denotes a propylene group or an ethylene group, most preferably an ethylene group.

The polyester resin compound with a glycerol backbone represented by the general formula (1) can be synthesized by reacting glycerol, an aromatic polycarboxylic acid substituted with a carboxylic acid at the ortho position or an anhydride thereof, and a polyhydric alcohol component as essential components.

The aromatic polycarboxylic acid substituted with a carboxylic acid at the ortho position or an anhydride thereof may be an orthophthalic acid or an anhydride thereof, a naphthalene 2,3-dicarboxylic acid or an anhydride thereof, a naphthalene 1,2-dicarboxylic acid or an anhydride thereof, an anthraquinone 2,3-dicarboxylic acid or an anhydride thereof, or a 2,3-anthracenecarboxylic acid or an anhydride thereof.

These compounds may have a substituent on any carbon atom of the aromatic ring. The substituent may be a chloro group, a bromo group, a methyl group, an ethyl group, an i-propyl group, a hydroxy group, a methoxy group, an ethoxy group, a phenoxy group, a methylthio group, a phenylthio group, a cyano group, a nitro group, an amino group, a phthalimide group, a carboxy group, a carbamoyl group, an N-ethylcarbamoyl group, a phenyl group, or a naphthyl group.

The polyhydric alcohol component may be an alkylene diol having 2 to 6 carbon atoms. Examples include diols, such as ethylene glycol, propylene glycol, butylene glycol, neopentyl glycol, 1,5-pentanediol, 3-methyl-1,5-pentanediol, 1,6-hexanediol, methylpentanediol, and dimethylbutanediol.

The polyester polyol according to the third example is a polyester polyol with an isocyanurate ring represented by the following general formula (3).

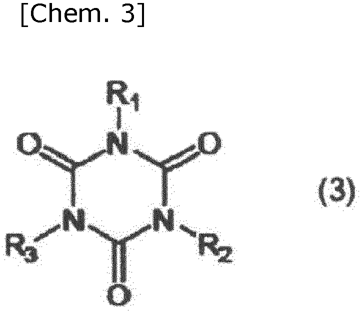

In the general formula (3), R₁, R₂, and R₃ independently denote "-(CH₂)n1-OH (wherein n1 denotes an integer in the range of 2 to 4)" or a structure represented by the general formula (4).

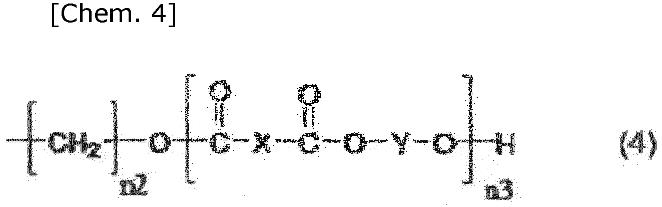

In the general formula (4), n2 denotes an integer in the range of 2 to 4, n3 denotes an integer in the range of 1 to 5, X denotes an arylene group that is selected from the group consisting of a 1,2-phenylene group, a 1,2-naphthylene group, a 2,3-naphthylene group, a 2,3-anthraquinonediyl group, and a 2,3-anthracenediyl group and that may have a substituent; and Y denotes an alkylene group having 2 to 6 carbon atoms. At least one of R₁, R₂, and R₃ is a group represented by the general formula (4).

In the general formula (3), the alkylene group represented by - (CH₂)n1- may be linear or branched. n1 is preferably 2 or 3, most preferably 2.

In the general formula (4), n2 denotes an integer in the range of 2 to 4, and n3 denotes an integer in the range of 1 to 5. X denotes an arylene group that is selected from the group consisting of a 1,2-phenylene group, a 1,2-naphthylene group, a 2,3-naphthylene group, a 2,3-anthraquinonediyl group, and a 2,3-anthracenediyl group and that may have a substituent.

When X is substituted with a substituent, X may be substituted with one or more substituents, and the substituents are bonded to any carbon atom that is different from a free radical on X. The substituent may be a chloro group, a bromo group, a methyl group, an ethyl group, an i-propyl group, a hydroxy group, a methoxy group, an ethoxy group, a phenoxy group, a methylthio group, a phenylthio group, a cyano group, a nitro group, an amino group, a phthalimide group, a carboxy group, a carbamoyl group, an N-ethylcarbamoyl group, a phenyl group, or a naphthyl group.

The substituent of X is preferably a hydroxy group, a cyano group, a nitro group, an amino group, a phthalimide group, a carbamoyl group, an N-ethylcarbamoyl group, or a phenyl group, most preferably a hydroxy group, a phenoxy group, a cyano group, a nitro group, a phthalimide group, or a phenyl group.

In the general formula (4), Y denotes an alkylene group having 2 to 6 carbon atoms, such as an ethylene group, a propylene group, a butylene group, a neopentylene group, a 1,5-pentylene group, a 3-methyl-1,5-pentylene group, a 1,6-hexylene group, a methylpentylene group, or a dimethylbutylene group. Among these, Y preferably denotes a propylene group or an ethylene group, most preferably an ethylene group.

In the general formula (3), at least one of R₁, R₂, and R₃ is a group represented by the general formula (4). In particular, all of R₁, R₂, and R₃ are preferably groups represented by the general formula (4).

Two or more of a compound in which one of R₁, R₂, and R₃ is a group represented by the general formula (4), a compound in which two of R₁, R₂, and R₃ are groups represented by the general formula (4), and a compound in which all of R₁, R₂, and R₃ are groups represented by the general formula (4) may be mixed.

The polyester polyol with an isocyanurate ring represented by the general formula (3) can be synthesized by reacting a triol with an isocyanurate ring, an aromatic polycarboxylic acid substituted with a carboxylic acid at the ortho position or an anhydride thereof, and a polyhydric alcohol component as essential components.

Examples of the triol with an isocyanurate ring include alkylene oxide adducts of isocyanuric acid, such as 1,3,5-tris(2-hydroxyethyl)isocyanuric acid and 1,3,5-tris(2-hydroxypropyl)isocyanuric acid.

The aromatic polycarboxylic acid substituted with a carboxylic acid at the ortho position or an anhydride thereof may be an orthophthalic acid or an anhydride thereof, a naphthalene 2,3-dicarboxylic acid or an anhydride thereof, a naphthalene 1,2-dicarboxylic acid or an anhydride thereof, an anthraquinone 2,3-dicarboxylic acid or an anhydride thereof, or a 2,3-anthracenecarboxylic acid or an anhydride thereof. These compounds may have a substituent on any carbon atom of the aromatic ring.

The substituent may be a chloro group, a bromo group, a methyl group, an ethyl group, an i-propyl group, a hydroxy group, a methoxy group, an ethoxy group, a phenoxy group, a methylthio group, a phenylthio group, a cyano group, a nitro group, an amino group, a phthalimide group, a carboxy group, a carbamoyl group, an N-ethylcarbamoyl group, a phenyl group, or a naphthyl group.

The polyhydric alcohol component may be an alkylene diol having 2 to 6 carbon atoms. Examples include diols, such as ethylene glycol, propylene glycol, butylene glycol, neopentyl glycol, 1,5-pentanediol, 3-methyl-1,5-pentanediol, 1,6-hexanediol, methylpentanediol, and dimethylbutanediol.

Among these, polyester polyol compounds with an isocyanurate ring produced using 1,3,5-tris(2-hydroxyethyl)isocyanuric acid or 1,3,5-tris(2-hydroxypropyl)isocyanuric acid as a triol compound with an isocyanurate ring, orthophthalic anhydride as an aromatic polycarboxylic acid substituted with a carboxylic acid at the ortho position or an anhydride thereof, and ethylene glycol as a polyhydric alcohol are particularly preferred in terms of oxygen barrier properties and adhesiveness.

The isocyanurate ring, which has high polarity and is trifunctional, can increase the polarity of the whole system and increase the crosslinking density. From such a perspective, it is preferable to contain 5% or more by mass of the isocyanurate ring based on the total solid content of the adhesive resin.

The isocyanate compound has two or more isocyanate groups in its molecule.

The isocyanate compound may be aromatic or aliphatic and may be a low-molecular-weight compound or a high-molecular-weight compound.

The isocyanate compound may also be a blocked isocyanate compound produced by an addition reaction using a known isocyanate blocking agent by an appropriate traditional method.

In particular, a polyisocyanate compound with three or more isocyanate groups is preferred in terms of adhesiveness and retort resistance, and an aromatic isocyanate compound is preferred in terms of oxygen barrier properties and moisture barrier properties.

Specific examples of the isocyanate compound include tetramethylene diisocyanate, hexamethylene diisocyanate, toluene diisocyanate, diphenylmethane diisocyanate, hydrogenated diphenylmethane diisocyanate, m-xylylene diisocyanate, hydrogenated xylylene diisocyanate, isophorone diisocyanate, and trimers of these isocyanate compounds, as well as adducts, biurets, and allophanates produced by reacting these isocyanate compounds with a low-molecular-weight active hydrogen compound or an alkylene oxide adduct thereof or with a high-molecular-weight active hydrogen compound.

Examples of the low-molecular-weight active hydrogen compound include ethylene glycol, propylene glycol, m-xylylene alcohol, 1,3-bishydroxyethylbenzene, 1,4-bishydroxyethylbenzene, trimethylolpropane, glycerol, pentaerythritol, erythritol, sorbitol, ethylenediamine, monoethanolamine, diethanolamine, triethanolamine, and m-xylylenediamine. Examples of the molecule active hydrogen compound include high-molecular-weight active hydrogen compounds, such as various polyester resins, polyether polyols, and polyamides.

An adhesive comprising a cured product of a composition containing a polyester polyol and an isocyanate compound may contain a phosphoric acid modified compound, for example, a compound represented by the following general formula (5) or (6).

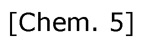

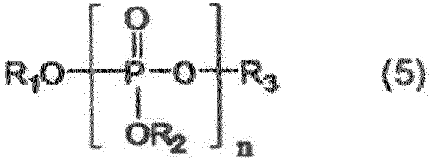

In the general formula (5), R₁, R₂, and R₃ denote a group selected from a hydrogen atom, alkyl groups having 1 to 30 carbon atoms, a (meth)acryloyl group, optionally substituted phenyl groups, and alkyl groups having a (meth)acryloyloxy group and having 1 to 4 carbon atoms, at least one of R₁, R₂, and R₃ is a hydrogen atom, and n denotes an integer in the range of 1 to 4.

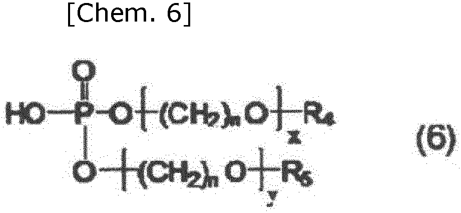

In the formula, R₄ and R₅ denote a group selected from a hydrogen atom, alkyl groups having 1 to 30 carbon atoms, a (meth)acryloyl group, optionally substituted phenyl groups, and alkyl groups having a (meth)acryloyloxy group and having 1 to 4 carbon atoms, n denotes an integer in the range of 1 to 4, x denotes an integer in the range of 0 to 30, and y denotes an integer in the range of 0 to 30, provided that x or y is not 0.

Specific examples include phosphoric acid, pyrophosphoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphoric acid. One or two or more of these can be used.

The phosphoric acid modified compound content of an adhesive agent layer containing a polyester polyol and an isocyanate compound preferably ranges from 0.005% to 10% by mass, more preferably 0.01% to 1% by mass.

A phosphoric acid modified compound content of 0.005% or more by mass can result in improved oxygen barrier properties and moisture barrier properties. A phosphoric acid modified compound content of 10% or less by mass can result in an adhesive layer with improved adhesiveness.

An adhesive agent layer containing a polyester polyol and an isocyanate compound may contain a plate-like inorganic compound, and such an adhesive agent layer can improve the oxygen barrier properties, moisture barrier properties, and adhesiveness of the adhesive layer. This can also improve the bending load resistance of the barrier laminate.

Examples of the plate-like inorganic compound include kaolinite-serpentine group clay minerals (halloysite, kaolinite, endellite, dickite, nacrite, antigorite, chrysotile, etc.) and the pyrophyllite-talc group (pyrophyllite, talc, chlorite, etc.).

Examples of the coupling agent include silane coupling agents, titanium coupling agents, and aluminum coupling agents, represented by the following general formula (7). These coupling agents may be used alone or in combination.

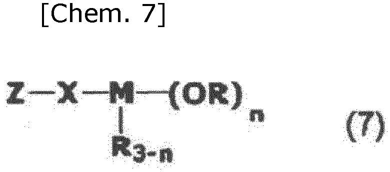

Examples of the silane coupling agents include vinyltrichlorosilane, vinyltrimethoxysilane, vinyltriethoxysilane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxytrimethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)γ-aminopropylmethyldimethoxysilane, N-β(aminoethyl)γ-aminopropyltrimethoxysilane, N-β(aminoethyl)γ-aminopropyltriethoxysilane, γ-aminopropyltrimethoxysilane, γ-aminopropyltriethoxysilane, N-phenyl-γ-aminopropyltrimethoxysilane, γ-chloropropyltrimethoxysilane, γ-mercaptopropyltrimethoxysilane, 3-isocyanatepropyltriethoxysilane, 3-acryloxypropyltrimethoxysilane, and 3-triethoxysilyl-N-(1,3-dimethyl-butylidene).

Examples of the titanium coupling agent include isopropyl triisostearoyl titanate, isopropyl tri(N-aminoethyl-aminoethyl) titanate, isopropyl tridodecylbenzenesulfonyl titanate, isopropyl tris(dioctyl pyrophosphate) titanate, tetraoctyl bis(didodecyl phosphite) titanate, tetraoctyl bis(ditridecyl phosphite) titanate, bis(dioctyl pyrophosphate) oxyacetate titanate, bis(dioctyl pyrophosphate) ethylene titanate, isopropyl trioctanoyl titanate, isopropyl dimethacryl isostearoyl titanate, isopropyl isostearoyl diacryl titanate, diisostearoyl ethylene titanate, isopropyl tri(dioctyl phosphate) titanate, isopropyl tricumyl phenyl titanate, and dicumyl phenyloxy acetate titanate.

Specific examples of the aluminum coupling agents include acetoalkoxy aluminum diisopropylate, diisopropoxy aluminum ethyl acetoacetate, diisopropoxy aluminum monomethacrylate, isopropoxy aluminum alkyl acetoacetate mono(dioctyl phosphate), aluminum-2-ethylhexanoate oxide trimers, aluminum stearate oxide trimers, and alkyl acetoacetate aluminum oxide trimers.

An adhesive comprising a cured product of a composition containing a polyester polyol and an isocyanate compound can contain cyclodextrin and/or a derivative thereof. Such an adhesive can improve the adhesiveness of the adhesive layer. Such an adhesive can further improve the bending load resistance.

More specifically, for example, cyclodextrin, alkylated cyclodextrin, acetylated cyclodextrin, or hydroxyalkylated cyclodextrin in which a hydrogen atom of a hydroxy group of a glucose unit of the cyclodextrin is substituted with another functional group can be used. A branched cyclic dextrin may also be used.

The cyclodextrin backbone of a cyclodextrin or a cyclodextrin derivative may be an α-cyclodextrin with six glucose units, a β-cyclodextrin with seven glucose units, or a γ-cyclodextrin with eight glucose units.

These compounds may be used alone or in combination. These cyclodextrins and/or derivatives thereof may hereinafter be collectively referred to as dextrin compounds.

The cyclodextrin compound is preferably a cyclodextrin derivative in terms of compatibility with and dispersibility in an adhesive agent layer.

The degree of substitution preferably ranges from 0.1 to 14 per glucose, more preferably 0.3 to 8 per glucose, in terms of the polarity of the various resins described above.

The alkylated cyclodextrin is methyl-α-cyclodextrin, methyl-β-cyclodextrin, or methyl-γ-cyclodextrin, for example. These compounds may be used alone or in combination.

The acetylated cyclodextrin is monoacetyl-α-cyclodextrin, monoacetyl-β-cyclodextrin, or monoacetyl-γ-cyclodextrin, for example. These compounds may be used alone or in combination.

The hydroxyalkylated cyclodextrin is hydroxypropyl-α-cyclodextrin, hydroxypropyl-β-cyclodextrin, or hydroxypropyl-γ-cyclodextrin. These compounds may be used alone or in combination.

The adhesive layer preferably has a thickness in the range of 0.5 to 6 µm, more preferably 0.8 to 5 µm, still more preferably 1 to 4.5 µm.

The adhesive layer with a thickness of 0.5 µm or more can have improved adhesiveness. When the adhesive layer is an adhesive agent layer containing a cured product of a composition containing a polyester polyol and an isocyanate compound, the bending load resistance can be improved.

The adhesive layer with a thickness of 6 µm or less can improve the processability of the barrier laminate.

The adhesive layer can be formed by coating on an evaporated film or the like by a known method, such as a direct gravure roll coating method, a gravure roll coating method, a kiss coating method, a reverse roll coating method, a fountain method, or a transfer roll coating method, followed by drying.

### (Sealant Layer)

In the barrier laminate according to the second embodiment, the sealant layer includes the second evaporated film and the sealant substrate. The barrier laminate including the sealant layer with such a structure can have further improved oxygen barrier properties and moisture barrier properties.

### (Second Evaporated Film)

The second evaporated film is provided on the multilayer substrate side of the sealant layer.

The second evaporated film comprises a metal, such as aluminum, zirconium, or magnesium, or the metal oxide described above.

Among these, an aluminum evaporated film is preferred in terms of oxygen barrier properties and moisture barrier properties. An aluminum evaporated film can effectively prevent the contents, particularly the contents rich in oil, from being oxidized due to light transmission.

A preferred thickness and a preferred forming method of the evaporated film are the same as those described for the evaporated film of the barrier laminate according to the first embodiment and are therefore not described here.

### (Sealant Substrate)

In one embodiment, the sealant substrate contains a resin material that can be fused together by heat.

The resin material that can be fused together by heat may be the resin material contained in the sealant layer of the barrier laminate according to the first embodiment.

Laminates of a substrate and a sealant layer comprising different resin materials have been used to produce packaging containers. After used packaging containers are collected, however, it is difficult to separate the substrate from the sealant layer, and therefore the used packaging containers are not actively recycled under the present situation.

A substrate and a sealant substrate each comprising the same material eliminate the need to separate the substrate from the sealant substrate and can improve the recyclability. Thus, the sealant substrate preferably comprises polypropylene among the resin materials described above in terms of the recyclability of a packaging container produced using the laminate.

The sealant substrate comprising polypropylene can improve the oil resistance of a packaging container produced using the barrier laminate.

The sealant substrate may contain the heat seal modifier and the additive agent without losing the features of the present invention.

The sealant substrate may have a monolayer structure or a multilayer structure.

The sealant substrate preferably has a thickness in the range of 15 to 100 µm, more preferably 20 to 70 µm.

The sealant substrate with a thickness of 15 µm or more can further improve the laminate strength of a packaging container with the barrier laminate.

The sealant substrate with a thickness of 100 µm or less can further improve the processability of the barrier laminate.

### (Barrier Laminate according to Third Embodiment)

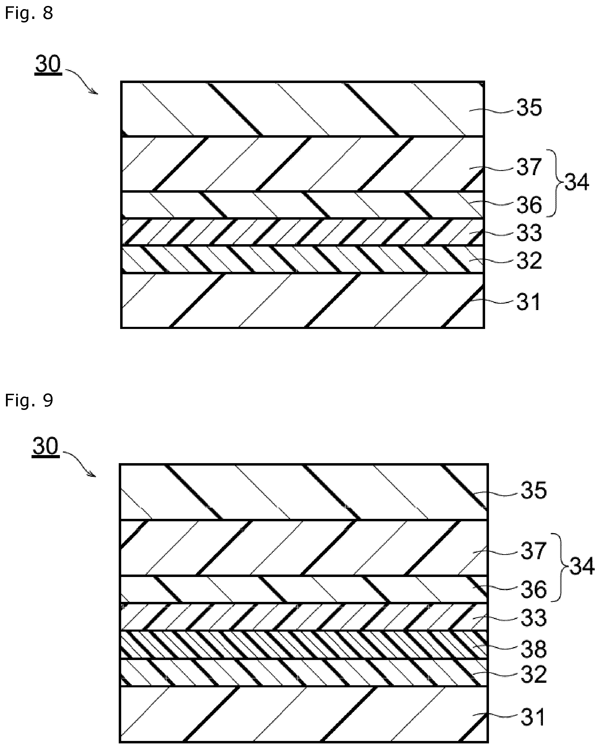

Figs. 8 and 9 are schematic cross-sectional views of an embodiment of the barrier laminate according to the third embodiment. As illustrated in Fig. 8, a barrier laminate 40 according to the third embodiment includes a substrate 41, an adhesive layer 42, an evaporated film 43, an intermediate layer 44, and a sealant layer 45, and the intermediate layer 44 includes at least a surface coating layer 46 and a polypropylene resin layer 47.

In one embodiment, as illustrated in Fig. 9, the barrier laminate 40 according to the third embodiment further includes a barrier coating layer 48 between the adhesive layer 42 and the evaporated film 43.

In the barrier laminate according to the third embodiment, the laminate strength between the intermediate layer and the evaporated film at a width of 15 mm is preferably 3 N or more, more preferably 4 N or more, still more preferably 5.5 N or more. The upper limit of the laminate strength of the barrier laminate according to the third embodiment may be 20 N or less.

Laminates of a substrate, an intermediate layer, and a sealant layer comprising different resin materials have been used to produce packaging containers. After used packaging containers are collected, however, it is difficult to separate the layers comprising different resin materials, and therefore the used packaging containers are not actively recycled under the present situation.

A substrate, a polypropylene resin layer of an intermediate layer, and a sealant layer each comprising the same material eliminates the need to separate them layer by layer and can improve the recyclability.

A substrate and a sealant each comprising the same material as a polypropylene resin layer of an intermediate layer, that is, polypropylene eliminates the need to separate collected packaging containers layer by layer and can improve the recyclability.

For a substrate and a sealant layer each comprising polypropylene, the polypropylene content of a barrier laminate is preferably 80% or more by mass, more preferably 85% or more by mass, still more preferably 90% or more by mass, of the total amount of resin materials in the barrier laminate. This can further improve the recyclability of a packaging container produced using a barrier laminate.

Each layer of the barrier laminate according to the third embodiment is described below.

### (Adhesive Layer, Evaporated Film, Barrier Coating Layer, Sealant Layer)

The adhesive layer, the evaporated film, the barrier coating layer, and the sealant layer of the barrier laminate according to the third embodiment may be the same as the adhesive layer, the evaporated film, the barrier coating layer, and the sealant layer of the barrier laminate according to the first embodiment or the second embodiment.

### (Substrate)

The substrate contains a resin material. Examples of the resin material in the substrate include polyolefins, vinyl resins, (meth)acrylic resins, cellulose resins, polyamides, polyimides, polyesters, and ionomer resins.

From the perspective of the recyclability of the barrier laminate, the substrate preferably comprises the same material as the polypropylene resin layer of the intermediate layer, that is, polypropylene.

The substrate comprising polypropylene can improve the oil resistance of a packaging container produced using the barrier laminate.

The substrate may contain the additive agent without losing the features of the present invention.

The substrate may have a monolayer structure or a multilayer structure.

Although the substrate may or may not be subjected to a stretching process, the substrate is preferably subjected to a stretching process in terms of the heat resistance and strength of the barrier laminate.

The substrate preferably has a thickness in the range of 10 to 50 µm, more preferably 20 to 40 µm.

The substrate with a thickness of 10 µm or more can improve the strength and heat resistance of the barrier laminate.

The substrate with a thickness of 50 µm or more can further improve the film-forming properties and processability of the barrier laminate.

The substrate may have a print layer on its surface. Any image, such as a letter, a pattern, a symbol, or a combination thereof, may be formed on the print layer.

The print layer can be formed on the substrate using a biomass-derived ink. This can reduce the environmental load.

The print layer may be formed by any method, for example, a known printing method, such as a gravure printing method, an offset printing method, or a flexographic printing method.

The substrate of the barrier laminate according to the third embodiment may be the same as the multilayer substrate of the barrier laminate according to the first embodiment.

### (Intermediate Layer)

The intermediate layer includes at least the surface coating layer and the polypropylene resin layer.

### (Surface Coating Layer, Polypropylene Resin Layer)

The surface coating layer and the polypropylene resin layer in the intermediate layer of the barrier laminate according to the third embodiment may be the same as the surface coating layer and the polypropylene resin layer in the multilayer substrate of the barrier laminate according to the first embodiment.

The intermediate layer can be produced off-line. More specifically, the intermediate layer can be produced by forming a resin film of a resin composition containing polypropylene by a T-die method, an inflation method, or the like, stretching the resin film, applying a coating liquid for forming a coat to the resin film, and drying the coating liquid.

The intermediate layer can also be produced in-line, more specifically, by forming a resin film of a resin composition containing polypropylene by a T-die method, an inflation method, or the like, stretching the resin film in the machine direction (MD direction), applying a coating liquid for forming a coat to the resin film, drying the coating liquid, and stretching the resin film in the transverse direction (TD direction). The stretching in the transverse direction may be performed first.

### (Packaging Container)

A packaging container according to the present invention includes the barrier laminate. Examples of the packaging container include packaging products (packaging bags), cover materials, and laminated tubes.

Examples of the packaging bags include packaging bags of various types, such as a standing pouch type, a side seal type, a two sided seal type, a three sided seal type, a four sided seal type, an envelope seal type, a butt seal type (pillow seal type), a ribbed seal type, a flat bottom seal type, a square bottom seal type, and a gusset type.

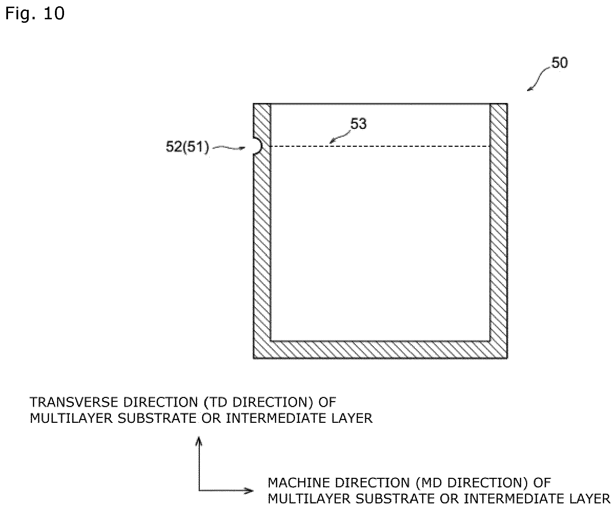

As illustrated in Fig. 10, a packaging container according to the present invention is a packaging bag 50 composed of two barrier laminates bonded together (the hatched portion is a heat-sealed portion).

When the multilayer substrate or the intermediate layer has higher tensile strength in the machine direction (MD direction) than in the transverse direction (TD direction), the packaging bag 50 is preferably produced such that the machine direction (MD direction) of the multilayer substrate or the intermediate layer corresponds to the transverse direction of the packaging bag 50 and such that the transverse direction (TD direction) of the multilayer substrate or the intermediate layer corresponds to the machine direction of the packaging bag 50. Such a structure makes it very easy to tear the packaging container in the transverse direction. The same applies to packaging containers exemplified below.

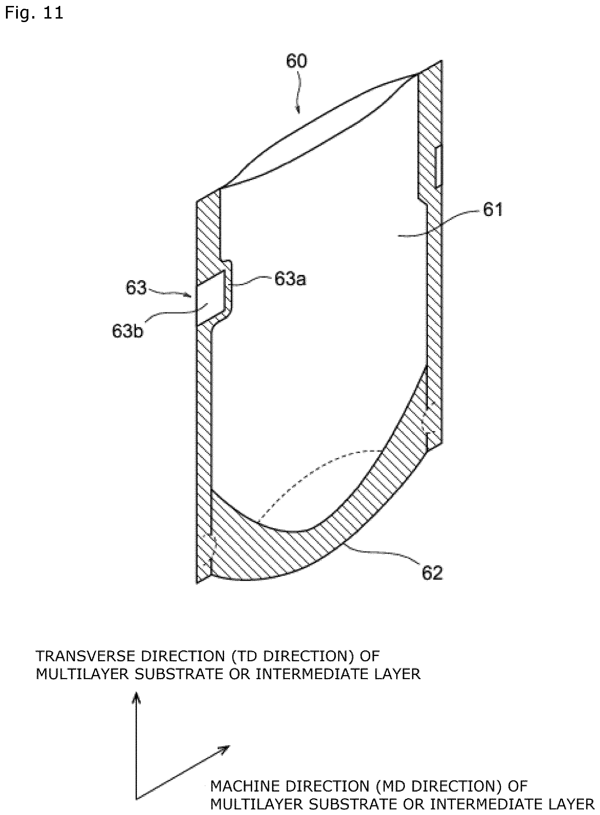

As illustrated in Fig. 11, a packaging container according to the present invention is a standing pouch 60.

Fig. 11 schematically illustrates an example of the structure of the standing pouch. As illustrated in Fig. 17, the standing pouch 60 is composed of a body (side sheet) 61 and a bottom (bottom sheet) 62.

At least one of the side sheet 61 and the bottom sheet 62 of the standing pouch 60 is composed of a barrier laminate according to the present invention.

In one embodiment, the body 61 of the standing pouch 60 can be formed by making a bag such that the sealant layer of a barrier laminate according to the present invention is the innermost layer.

In another embodiment, the side sheet 61 can be formed by preparing two barrier laminates according to the present invention, superimposing the barrier laminates with the sealant layers facing each other, inserting from each end of the superimposed barrier laminates two laminates folded in a V shape such that the sealant layers are on the outside, and heat-sealing the laminates. A standing pouch with a body having a side gusset can be produced in this way.

In one embodiment, the bottom sheet 62 of the standing pouch 60 can be formed by inserting a barrier laminate according to the present invention between side sheets made into a bag and by heat-sealing them. More specifically, the bottom sheet 62 can be formed by folding the barrier laminate in a V shape such that the sealant layer is on the outside, inserting the barrier laminate between side sheets made into a bag, and heat-sealing them.

As illustrated in Fig. 10, the packaging container may have a tear means 51.

As illustrated in Fig. 10, the tear means 51 may be a notch 52 serving as a starting point for tearing or may be a half-cut line 53 formed by laser processing, with a cutter, or the like as a tear line.

As illustrated in Fig. 11, the packaging container may have a vapor release mechanism 63. The vapor release mechanism 63 is configured such that when the vapor pressure in the packaging container reaches a predetermined value or more the inside of the packaging container communicates with the outside to release the vapor and is also configured to prevent the vapor from being released at a portion other than the vapor release mechanism 63.

The vapor release mechanism 63 has a vapor release sealed portion 63a protruding from a side sealed portion toward the inside of the packaging container and an unsealed portion 63b separated from a content storage portion by the vapor release sealed portion 63a.

The unsealed portion 63b communicates with the outside of the packaging container. Heating a packaging container filled with contents and having a heat-sealed opening portion in a microwave oven or the like increases the internal pressure and breaks the vapor sealed portion 63a. The vapor is released from the packaging container through the broken portion of the vapor seal 63a and the unsealed portion 63b.

The heat sealing method may be a known method, such as bar sealing, rotating roll sealing, belt sealing, impulse sealing, highfrequency sealing, or ultrasonic sealing.

The contents to be filled in a packaging container may be, but are not limited to, liquid, powder, or gel. The contents may be food or nonfood.

### EXAMPLES

Although the present invention is more specifically described in the following examples, the present invention is not limited to these examples.

### Example 1-1

A solution for forming a surface coating layer with the following composition was applied to a corona-treated surface of a biaxially stretched polypropylene film with a thickness of 20 µm (ME-1 manufactured by Mitsui Chemicals Tohcello, Inc.) and was dried to form a surface coating layer with a thickness of 0.5 µm, thus preparing a multilayer substrate.

### (Composition of Coating Liquid for Forming Surface Coating Layer)

| | |
|---|---|
| · Poly(vinyl alcohol) | 5% by mass |

(VC-10 manufactured by Japan Vam & Poval Co., Ltd., the degree of polymerization: 1000, the degree of saponification: 99.3% or more by mole)

| | |
|---|---|
| · Water | 90% by mass |
| · Isopropanol (IPA) | 5% by mass |

An evaporated film of silicon oxide containing carbon with a thickness of 12 nm was formed on the surface coating layer of the prepared multilayer substrate using a low-temperature plasma chemical vapor deposition apparatus as a real apparatus while applying tension to the multilayer substrate by roll-to-roll (CVD method). The evaporated film formation conditions are described below.

### (Formation Conditions)

· Hexamethyldisiloxane:oxygen gas: helium = 1:10:10 (unit: slm)
· Electricity supplied to cooling/electrode drum: 22 kw
· Line speed: 100 m/min

In the evaporated film of silicon oxide containing carbon, the carbon content C, the silicon content Si, and the oxygen content O were 32.7%, 29.8%, and 37.5%, respectively, of the total (100%) of three elements of silicon, oxygen, and carbon. Each element content was measured by X-ray photoelectron spectroscopy (XPS) and narrow scan analysis under the following measurement conditions.

### (Measurement Conditions)

Equipment used: "ESCA-3400" (manufactured by Kratos)
[1] Spectrum Sampling Conditions
   Incident X-rays: MgKα (monochromatic X-rays, hv = 1253.6 eV)
   X-ray output: 150 W (10 kV, 15 mA)
   X-ray scan area (measurement region): approximately 6 mmϕ Photoelectron acceptance angle: 90 degrees
[2] Ion Sputtering Conditions
   Ionic species: Ar⁺
   Accelerating voltage: 0.2 (kV)
   Emission current: 20 (mA)
   Etching range: 10 mmϕ
   Ion sputtering time: 30 seconds to take a spectrum

385 g of water, 67 g of isopropyl alcohol, and 9.1 g of 0.5 N hydrochloric acid were mixed to prepare a solution with pH of 2.2. The solution was mixed with 175 g of tetraethoxysilane as a metal alkoxide and 9.2 g of glycidoxypropyltrimethoxysilane as a silane coupling agent while cooling to 10°C to prepare a solution A.

14.7 g of poly(vinyl alcohol) with a degree of saponification of 99% or more and a degree of polymerization of 2400 as a water-soluble polymer, 324 g of water, and 17 g of isopropyl alcohol were mixed to prepare a solution B.

The solution A and the solution B were mixed at 6.5:3.5 based on mass to prepare a barrier coating agent.

The barrier coating agent was applied by a spin coating method to the evaporated film formed on the multilayer substrate and was heat-treated in an oven at 80°C for 60 seconds to form a barrier coating layer with a thickness of 300 nm.

An unstretched polypropylene film with a thickness of 30 µm (CP S manufactured by Mitsui Chemicals Tohcello, Inc.) was dry-laminated as a sealant layer on the formed barrier coating layer via a polyurethane adhesive (Takelac A-969V/Takenate A-5 (blend ratio: 3/1) manufactured by Mitsui Chemicals, Inc.) and was allowed to stand at 40°C for 24 hours to prepare the barrier laminate according to the first embodiment. An adhesive layer formed of the polyurethane adhesive had a thickness 1 µm.

The polypropylene content of the barrier laminate was 96% by mass.

### Example 1-2

The barrier laminate according to the first embodiment was prepared in the same manner as in Example 1-1 except that the composition of the coating liquid for forming a surface coating layer was changed as described below.

The polypropylene content of the barrier laminate was 96% by mass.

### (Composition of Coating Liquid for Forming Surface Coating Layer)

| | |
|---|---|
| · EVOH | 75% by mass |

### (Eversolve #10 manufactured by Nihon Cima Co., Ltd.)

| | |
|---|---|
| · Water | 12.5% by mass |
| · 1-Propanol | 12.5% by mass |

### Comparative Example 1-1

The polypropylene (Novatec FL203D manufactured by Japan Polypropylene Corporation, melting point: 160°C) was extruded and was then stretched with a sequential biaxial stretching apparatus 5 times in the machine direction (MD direction) and 10 times in the transverse direction (TD direction) to prepare a propylene film with a thickness of 20 µm.

A barrier laminate was prepared in the same manner as in Example 1-1 except that the multilayer substrate in Example 1-1 was changed to the prepared polypropylene film.

### Example 2-1

A multilayer substrate was prepared in the same manner as in Example 1-1.

An evaporated film of silicon oxide containing carbon with a thickness of 12 nm (first evaporated film) was formed in the same manner as in Example 1-1 on the surface coating layer of the prepared multilayer substrate (CVD method).

A barrier coating layer with a thickness of 300 nm was formed in the same manner as in Example 1-1 on the evaporated film formed on the multilayer substrate.

An unstretched polypropylene film 25 µm in thickness having an aluminum evaporated film with a thickness of 450 angstroms on one surface (2703 manufactured by Toray Advanced Film Co., Ltd.) was prepared as a heat seal layer.

The formed barrier coating layer and the aluminum evaporated film of the heat seal layer were stacked via an adhesive containing a polyester polyol and an isocyanate compound (trade name: PASLIM VM001/VM102CP (blend ratio: 1:1) manufactured by DIC Corporation) and were allowed to stand at 40°C for 48 hours to prepare the barrier laminate according to the second embodiment. An adhesive layer formed of the two-component adhesive had a thickness of 1 µm.

The polypropylene content of the barrier laminate was 92% by mass.

### Example 2-2

The barrier laminate according to the second embodiment was prepared in the same manner as in Example 2-1 except that the composition of the coating liquid for forming a surface coating layer was changed as described below.

The polypropylene content of the barrier laminate was 92% by mass.

### (Composition of Coating Liquid for Forming Surface Coating Layer)

| | |
|---|---|
| · EVOH | 75% by mass |

### (Eversolve #10 manufactured by Nihon Cima Co., Ltd.)

| | |
|---|---|
| · Water | 12.5% by mass |
| · 1-Propanol | 12.5% by mass |

### Example 2-3

The barrier laminate according to the second embodiment was prepared in the same manner as in Example 2-1 except that the adhesive used to form the adhesive layer was changed to the polyurethane adhesive (Takelac A-969V/Takenate A-5 (blend ratio: 3/1) manufactured by Mitsui Chemicals, Inc.).

The polypropylene content of the barrier laminate was 92% by mass.

### Comparative Example 2-1

The polypropylene (Novatec FL203D manufactured by Japan Polypropylene Corporation, melting point: 160°C) was extruded and was then stretched with a sequential biaxial stretching apparatus 5 times in the machine direction (MD direction) and 10 times in the transverse direction (TD direction) to prepare a propylene film with a thickness of 20 µm.

A barrier laminate was prepared in the same manner as in Example 2-1 except that the multilayer substrate in Example 2-1 was changed to the prepared polypropylene film.

### Example 3-1

A solution for forming a surface coating layer with the following composition was applied to the corona-treated surface of the biaxially stretched polypropylene film with a thickness of 20 µm (ME-1 manufactured by Mitsui Chemicals Tohcello, Inc.) and was dried to form a surface coating layer with a thickness of 0.5 µm, thus preparing an intermediate layer.

### (Composition of Coating Liquid for Forming Surface Coating Layer)

| | |
|---|---|
| · Poly(vinyl alcohol) | 5% by mass |

(VC-10 manufactured by Japan Vam & Poval Co., Ltd., the degree of polymerization: 1000, the degree of saponification: 99.3% or more by mole)

| | |
|---|---|
| · Water | 90% by mass |
| · IPA | 5% by mass |

An evaporated film of silicon oxide containing carbon with a thickness of 12 nm was formed on the surface coating layer of the prepared intermediate layer using a low-temperature plasma chemical vapor deposition apparatus as a real apparatus while applying tension to the multilayer substrate by roll-to-roll (CVD method). The evaporated film formation conditions are described below.

### (Formation Conditions)

· Hexamethyldisiloxane:oxygen gas: helium = 1:10:10 (unit: slm)
· Electricity supplied to cooling/electrode drum: 22 kw
· Line speed: 100 m/min

A barrier coating layer with a thickness of 300 nm was formed in the same manner as in Example 1-1 on the evaporated film formed on the intermediate layer.

An adhesive layer with a thickness of 3 µm was formed on the formed barrier coating layer using the adhesive containing a polyester polyol and an isocyanate compound (trade name: PASLIM VM001/VM102CP (blend ratio: 1:1) manufactured by DIC Corporation), and a stretched polypropylene film with a thickness of 20 µm (U1 manufactured by Mitsui Chemicals Tohcello, Inc.) was placed as a substrate on the adhesive layer.

An adhesive layer with a thickness of 1 µm was formed on the polypropylene resin layer of the intermediate layer using the polyurethane adhesive (Takelac A-969V/Takenate A-5 (blend ratio: 3/1) manufactured by Mitsui Chemicals, Inc.), and the unstretched polypropylene film with a thickness of 30 µm (CP S manufactured by Mitsui Chemicals Tohcello, Inc.) was placed as a sealant layer on the adhesive layer to prepare the barrier laminate according to the third embodiment.

The polypropylene content of the barrier laminate was 93% by mass.

### Example 3-2

The barrier laminate according to the third embodiment was prepared in the same manner as in Example 3-1 except that the composition of the coating liquid for forming a surface coating layer was changed as described below.

The polypropylene content of the barrier laminate was 93% by mass.

### (Composition of Coating Liquid for Forming Surface Coating Layer)

| | |
|---|---|
| · EVOH | 75% by mass |

### (Eversolve #10 manufactured by Nihon Cima Co., Ltd.)

| | |
|---|---|
| · Water | 12.5% by mass |
| · 1-propanol | 12.5% by mass |

### Comparative Example 3-1

The polypropylene (Novatec FL203D manufactured by Japan Polypropylene Corporation, melting point: 160°C) was extruded and was then stretched with a sequential biaxial stretching apparatus 5 times in the machine direction (MD direction) and 10 times in the transverse direction (TD direction) to prepare a propylene film with a thickness of 20 µm.

A barrier laminate was prepared in the same manner as in Example 3-1 except that the intermediate layer in Example 3-1 was changed to the prepared polypropylene film.

### <<Evaluation of Gas Barrier Properties>>

The barrier laminates prepared in the examples and comparative examples were cut to prepare test specimens. The oxygen permeability (cc/m²·day·atm) and moisture permeability (g/m²·day) of the test specimens were measured by the following method. Tables 1 to 3 summarize the results.

### [Oxygen Permeability]

The oxygen permeability of each test specimen was measured with an oxygen permeability measuring apparatus (OX-TRAN 2/20 manufactured by MOCON) at 23°C and at a relative humidity of 90% RH in accordance with JIS K 7126. The test specimen was set such that the multilayer substrate or substrate side was the oxygen supply side.

### [Moisture Permeability]

The moisture permeability of each test specimen was measured with a moisture permeability measuring apparatus (PERMATRAN-w 3/33 manufactured by MOCON) at 40°C and at a relative humidity of 90% RH in accordance with JIS K 7129. The test specimen was set such that the multilayer substrate or substrate side was the moisture supply side.

### <<Laminate Strength Test>>

The laminate strength (N/15 mm) of a test specimen prepared by cutting each barrier laminate prepared in the examples and comparative examples into a strip with a width of 15 mm was measured with a tensile tester (Tensilon universal testing machine manufactured by Orientec Co., Ltd.) in accordance with JIS K 6854-2 by 90-degree peeling (a T peel method) at a peel rate of 50 mm/min.

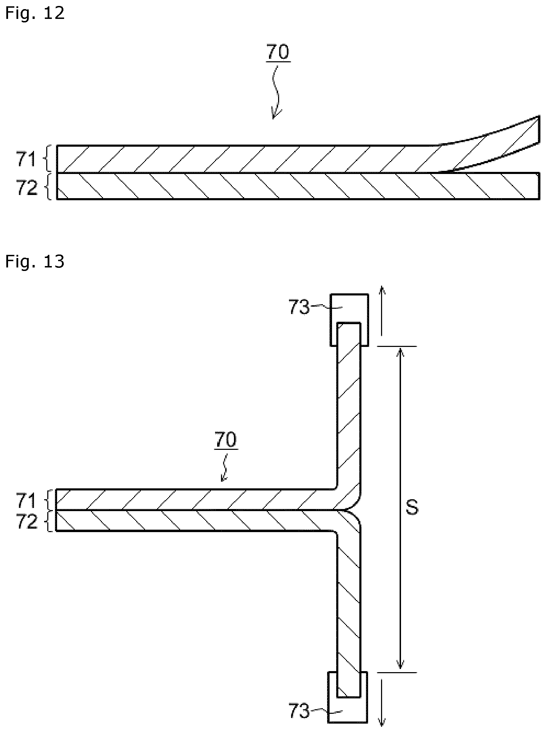

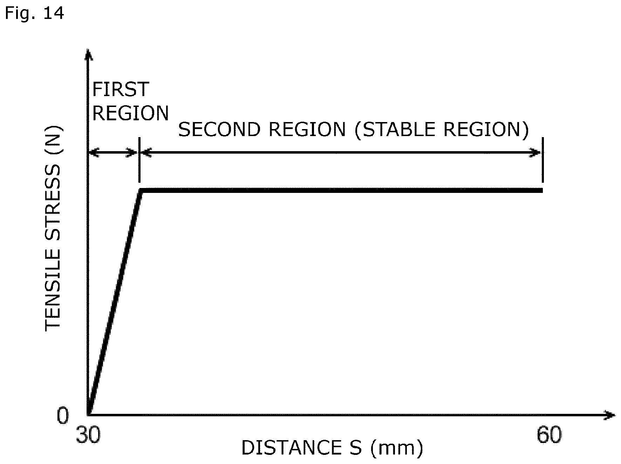

More specifically, first, each barrier laminate was cut to prepare a strip of test specimen 70 in which a substrate 71 and a sealant layer 72 were separated by 15 mm in the longitudinal direction, as illustrated in Fig. 12. Subsequently, as illustrated in Fig. 13, the separated portions of the substrate 71 and the sealant layer 72 were held with clamps 73 of the measuring apparatus. The clamps 73 were pulled at a rate of 50 mm/min in the opposite directions perpendicular to the surface between the substrate 71 and the sealant layer 72 bonded together to measure the average tensile stress in the stable region (see Fig. 14). The distance S between the clamps 73 was 30 mm at the beginning of pulling and was 60 mm at the end of pulling. Fig. 14 is a graph showing changes in tensile stress as a function of the distance S between the clamps 73. As illustrated in Fig. 14, changes in tensile stress as a function of the distance S are first larger in a first region and are then smaller in a second region (stable region).

The average tensile stress of five test specimens 70 in the stable region was measured as laminate strength. The measurement was performed at a temperature of 23°C and at a relative humidity of 50%. Tables 1 to 3 summarize the measurement results.

**[Table 1]**

| Table 1 | Polypropylene content (mass%) | Evaluation of gas barrier properties | | Laminate strength test (N/15 mm) |
|---|---|---|---|---|
| | | Oxygen permeability (cc/m²·day·atm) | Moisture permeability (g/m²·day) | |
| Example 1-1 | 96 | 0.1 | 0.3 | 6.3 |
| Example 1-2 | 96 | 0.1 | 0.5 | 5.9 |
| Comparative example 1-1 | 97 | 6.2 | 1.2 | 0.1 |

**[Table 2]**

| Table 2 | Polypropylene content (mass%) | Evaluation of gas barrier properties | | Laminate strength test (N/15 mm) |
|---|---|---|---|---|
| | | Oxygen permeability (cc/m²·day·atm) | Moisture permeability (g/m²·day) | |
| Example 2-1 | 92 | 0.1 | 0.2 | 6.3 |
| Example 2-2 | 92 | 0.1 | 0.3 | 5.9 |
| Example 2-3 | 92 | 0.1 | 0.3 | 6.3 |
| Comparative example 2-1 | 93 | 6.2 | 1.2 | 0.1 |

**[Table 3]**

| Table 3 | Polypropylene content (mass%) | Evaluation of gas barrier properties | | Laminate strength test (N/15 mm) |
|---|---|---|---|---|
| | | Oxygen permeability (cc/m²·day·atm) | Moisture permeability (g/m²·day) | |
| Example 3-1 | 93 | 0.1 | 0.3 | 6.3 |
| Example 3-2 | 93 | 0.1 | 0.5 | 5.9 |
| Comparative example 3-1 | 94 | 6.2 | 1.2 | 0.1 |

### Example 4-1

A coating liquid for forming a surface coating layer prepared as described below was applied to the corona-treated surface of the biaxially stretched polypropylene film of Example 1-1 and was dried to form a surface coating layer with a thickness of 0.5 µm, thus preparing a multilayer substrate.

A (meth)acrylic resin with a hydroxy group (number-average molecular weight: 25,000, glass transition temperature: 99°C, hydroxyl value: 80 mgKOHL/g) was diluted with a mixed solvent of methyl ketone and ethyl acetate (mixing ratio: 1:1) to a solid concentration of 10% by mass to prepare a main component.

An ethyl acetate solution containing tolylene diisocyanate (solid content: 75% by mass) was added to the main component as a curing agent to prepare a coating liquid for forming a surface coating layer. The amount of the curing agent used was 10 parts by mass per 100 parts by mass of the main component.

An evaporated film was then formed in the same manner as in Example 1-1.

A barrier coating layer was then formed on the evaporated film such that the solid content ratio of the metal alkoxide to the water-soluble polymer (metal alkoxide/water-soluble polymer) was 5.1 based on mass.

The ratio of Si element to C element on the surface of the barrier coating layer was measured. The measurement was performed by X-ray photoelectron spectroscopy (XPS) and narrow scan analysis under the following measurement conditions. The ratio of Si element to C element on the surface of the barrier coating layer was measured in the same manner in the following examples.

### (Measurement Conditions)

Equipment used: "ESCA-3400" (manufactured by Kratos)
[1] Spectrum Sampling Conditions
   Incident X-rays: MgKα (monochromatic X-rays, hv = 1253.6 eV)
   X-ray output: 150 W (10 kV, 15 mA)
   X-ray scan area (measurement region): approximately 6 mmϕ Photoelectron acceptance angle: 90 degrees
[2] Ion Sputtering Conditions
   Ionic species: Ar⁺
   Accelerating voltage: 0.2 (kV)
   Emission current: 20 (mA)
   Etching range: 10 mmϕ
   Ion sputtering time: 30 seconds + 30 seconds + 60 seconds (120 seconds in total) to take a spectrum

An unstretched polypropylene film with a thickness of 70 µm (P1128 manufactured by Toyobo Co., Ltd.) was then dry-laminated on the barrier coating layer using a two-component polyurethane adhesive to form a sealant layer, thus preparing the barrier laminate according to the first embodiment.

### Example 4-2

The barrier laminate according to the first embodiment was prepared in the same manner as in Example 4-1 except that the barrier coating layer was formed such that the solid content ratio of the metal alkoxide to the water-soluble polymer (metal alkoxide/water-soluble polymer) was 4.1 based on mass.

### Example 4-3

The barrier laminate according to the first embodiment was prepared in the same manner as in Example 4-1 except that the barrier coating layer was formed such that the solid content ratio of the metal alkoxide to the water-soluble polymer (metal alkoxide/water-soluble polymer) was 3.3 based on mass.

### Example 4-4

The barrier laminate according to the first embodiment was prepared in the same manner as in Example 4-1 except that the barrier coating layer was formed such that the solid content ratio of the metal alkoxide to the water-soluble polymer (metal alkoxide/water-soluble polymer) was 2.7 based on mass.

### Example 4-5

The barrier laminate according to the first embodiment was prepared in the same manner as in Example 4-1 except that the barrier coating layer was formed such that the solid content ratio of the metal alkoxide to the water-soluble polymer (metal alkoxide/water-soluble polymer) was 1.9 based on mass.

### Example 4-6

The barrier laminate according to the first embodiment was prepared in the same manner as in Example 4-1 except that the barrier coating layer was formed such that the solid content ratio of the metal alkoxide to the water-soluble polymer (metal alkoxide/water-soluble polymer) was 1.5 based on mass.

### Example 5-1

The barrier laminate according to the first embodiment was prepared in the same manner as in Example 4-1 except that the formation of the evaporated film was changed as described below.

A silicon oxide (silica) evaporated film with a thickness of 20 nm was formed on the surface coating layer using an induction heating vacuum film-forming apparatus with a plasma gun as a real apparatus while applying tension to the multilayer substrate by roll-to-roll (PVD method). The evaporated film formation conditions are described below.

### (Formation Conditions)

### (Plasma Radiation Conditions)

· Line speed: 30 m/min
· Degree of vacuum: 1.7 x 10⁻² Pa
· Output: 5.7 kw
· Accelerating voltage: 151 V
· Ar gas flow rate: 7.5 sccm

### (Film-Forming Conditions)

· Deposition material: SiO
· Reactant gas: O₂
· Reactant gas flow rate: 100 sccm

### Example 5-2

The barrier laminate according to the first embodiment was prepared in the same manner as in Example 5-1 except that the barrier coating layer was formed such that the solid content ratio of the metal alkoxide to the water-soluble polymer (metal alkoxide/water-soluble polymer) was 4.1 based on mass.

### Example 5-3

The barrier laminate according to the first embodiment was prepared in the same manner as in Example 5-1 except that the barrier coating layer was formed such that the solid content ratio of the metal alkoxide to the water-soluble polymer (metal alkoxide/water-soluble polymer) was 3.3 based on mass.

### Example 5-4

The barrier laminate according to the first embodiment was prepared in the same manner as in Example 5-1 except that the barrier coating layer was formed such that the solid content ratio of the metal alkoxide to the water-soluble polymer (metal alkoxide/water-soluble polymer) was 2.7 based on mass.

### Example 5-5

The barrier laminate according to the first embodiment was prepared in the same manner as in Example 5-1 except that the barrier coating layer was formed such that the solid content ratio of the metal alkoxide to the water-soluble polymer (metal alkoxide/water-soluble polymer) was 1.9 based on mass.

### Example 5-6

The barrier laminate according to the first embodiment was prepared in the same manner as in Example 5-1 except that the barrier coating layer was formed such that the solid content ratio of the metal alkoxide to the water-soluble polymer (metal alkoxide/water-soluble polymer) was 1.5 based on mass.

### Example 6-1

The barrier laminate according to the first embodiment was prepared in the same manner as in Example 4-1 except that the formation of the evaporated film was changed as described below.

A continuous evaporated-film-forming apparatus with a pretreatment section including an oxygen plasma pretreatment apparatus and a film-forming section was used as a real apparatus. In the pretreatment section, plasma is introduced from a plasma supply nozzle under the following conditions to perform oxygen plasma pretreatment on the surface coating layer while applying tension to the multilayer substrate by roll-to-roll. In the film-forming section to which the multilayer substrate was continuously transported, an aluminum oxide (alumina) evaporated film with a thickness of 12 nm was formed on the oxygen-plasma-treated surface using a reactive resistance heating system as a heating means for a vacuum evaporation method under the following conditions (PVD method).

### (Formation Conditions)

### (Oxygen Plasma Pretreatment Conditions)

· Plasma intensity: 200 W·sec/m²
· Plasma-forming gas ratio: oxygen:argon = 2:1
· Applied voltage between pretreatment drum and plasma supply nozzle: 340 V

### (Film-Forming Conditions)

· Transport speed: 400 m/min
· Oxygen gas supply: 20000 sccm

### Example 6-2

The barrier laminate according to the first embodiment was prepared in the same manner as in Example 6-1 except that the barrier coating layer was formed such that the solid content ratio of the metal alkoxide to the water-soluble polymer (metal alkoxide/water-soluble polymer) was 4.1 based on mass.

### Example 6-3

The barrier laminate according to the first embodiment was prepared in the same manner as in Example 6-1 except that the barrier coating layer was formed such that the solid content ratio of the metal alkoxide to the water-soluble polymer (metal alkoxide/water-soluble polymer) was 3.3 based on mass.

### Example 6-4

The barrier laminate according to the first embodiment was prepared in the same manner as in Example 6-1 except that the barrier coating layer was formed such that the solid content ratio of the metal alkoxide to the water-soluble polymer (metal alkoxide/water-soluble polymer) was 2.7 based on mass.

### Example 6-5

The barrier laminate according to the first embodiment was prepared in the same manner as in Example 6-1 except that the barrier coating layer was formed such that the solid content ratio of the metal alkoxide to the water-soluble polymer (metal alkoxide/water-soluble polymer) was 1.9 based on mass.

### Example 6-6

The barrier laminate according to the first embodiment was prepared in the same manner as in Example 6-1 except that the barrier coating layer was formed such that the solid content ratio of the metal alkoxide to the water-soluble polymer (metal alkoxide/water-soluble polymer) was 1.5 based on mass.

### <<Evaluation of Gas Barrier Properties (after Lamination)>>

The barrier laminates prepared in Examples 4 to 6 were cut to prepare test specimens. The oxygen permeability (cc/m²·day·atm) and moisture permeability (g/m²·day) of the test specimens were measured as described above. Tables 4 to 6 summarize the results. In Tables 4 to 6, the units of oxygen permeability and vapor permeability are omitted.

### <<Evaluation of Gas Barrier Properties (After Gelbo Flex Test)>>

Cylindrical bags were prepared using the barrier laminates prepared in Examples 4 to 6. A Gelbo Flex test according to ASTM F392 was performed on these bags ten times.

Subsequently, the barrier laminates of the bags were cut to prepare test specimens. The oxygen permeability (cc/m²·day·atm) and moisture permeability (g/m²·day) of the test specimens were measured as described above. Tables 4 to 6 summarize the results. In Tables 4 to 6, the units of oxygen permeability and vapor permeability are omitted.

**[Table 4]**

| Table 4 | Solid content ratio | Si/C ratio | Evaluation of gas barrier properties | | | |
|---|---|---|---|---|---|---|
| | | | After lamination | | After Gelbo Flex | |
| | | | Oxygen permeability | Moisture permeability | Oxygen permeability | Moisture permeability |
| Example 4-1 | 5.1 | 1.69 | 2.4 | 3.2 | 5.8 | 3.5 |
| Example 4-2 | 4.1 | 1.45 | 0.2 | 0.6 | 1.9 | 0.7 |
| Example 4-3 | 3.3 | 1.26 | 0.1 | 0.5 | 1.4 | 0.5 |
| Example 4-4 | 2.7 | 1.11 | 0.2 | 0.6 | 1.3 | 0.6 |
| Example 4-5 | 1.9 | 0.92 | 0.1 | 0.7 | 0.9 | 0.8 |
| Example 4-6 | 1.5 | 0.83 | 0.1 | 0.6 | 0.9 | 0.6 |

**[Table 5]**

| Table 5 | Solid content ratio | Si/C ratio | Evaluation of gas barrier properties | | | |
|---|---|---|---|---|---|---|
| | | | After lamination | | After Gelbo Flex | |
| | | | Oxygen permeability | Moisture permeability | Oxygen permeability | Moisture permeability |
| Example 5-1 | 5.1 | 1.69 | 3.2 | 3.8 | 5.2 | 4.9 |
| Example 5-2 | 4.1 | 1.45 | 0.2 | 0.8 | 2.9 | 0.7 |
| Example 5-3 | 3.3 | 1.26 | 0.3 | 0.8 | 2.5 | 0.8 |
| Example 5-4 | 2.7 | 1.11 | 0.2 | 0.7 | 2.3 | 0.8 |
| Example 5-5 | 1.9 | 0.92 | 0.2 | 0.8 | 1.9 | 0.8 |
| Example 5-6 | 1.5 | 0.83 | 0.2 | 0.6 | 1.7 | 0.8 |

**[Table 6]**

| Table 6 | Solid content ratio | Si/C ratio | Evaluation of gas barrier properties | | | |
|---|---|---|---|---|---|---|
| | | | After lamination | | After Gelbo Flex | |
| | | | Oxygen permeability | Moisture permeability | Oxygen permeability | Moisture permeability |
| Example 6-1 | 5.1 | 1.69 | 5.8 | 4.8 | 9.8 | 5.2 |
| Example 6-2 | 4.1 | 1.45 | 0.2 | 0.7 | 4.3 | 0.8 |
| Example 6-3 | 3.3 | 1.26 | 0.2 | 0.6 | 3.8 | 0.7 |
| Example 6-4 | 2.7 | 1.11 | 0.3 | 0.8 | 3.9 | 0.8 |
| Example 6-5 | 1.9 | 0.92 | 0.2 | 0.8 | 3.5 | 0.9 |
| Example 6-6 | 1.5 | 0.83 | 0.2 | 0.7 | 3.2 | 0.9 |

### Reference Signs List

10 barrier laminate according to first embodiment , 11 multilayer substrate, 12 evaporated film, 13 sealant layer, 14 polypropylene resin layer, 15 surface coating layer, 16 barrier coating layer
20 barrier laminate according to second embodiment, 21 multilayer substrate, 22 first evaporated film, 23 adhesive layer, 24 sealant layer, 25 polypropylene resin layer, 26 surface coating layer, 27 second evaporated film, 28 sealant substrate, 29 barrier coating layer,
30 barrier laminate according to third embodiment, 31 substrate, 32 adhesive layer, 33 evaporated film, 34 intermediate layer, 35 sealant layer, 36 surface coating layer, 37 polypropylene resin layer, 38 barrier coating layer,
50 packaging bag, 51 tear means, 52 notch, 53 half-cut line
60 standing pouch, 61 body (side sheet), 62 bottom (bottom sheet), 63 vapor release mechanism, 63a vapor sealed portion, 63b unsealed portion,
70 test specimen, 71 substrate, 72 sealant layer, 73 clamp
A vacuum chamber, B unwinder, C film-forming drum, D winder, E feed roller, F evaporation source, G reaction gas supply unit, H anti-deposition box, I deposition material, J plasma gun
A1 vacuum chamber, B1 unwinder, C1 cooling/electrode drum, D1 winder, E1 feed roller, F1 glow discharge plasma, G1 reaction gas supply unit, H1 raw material supply nozzle, I1 raw material gas supply unit, J1 magnet, K1 power supply, L1 vacuum pump
The following items are disclosed:
[Item 1]
   A barrier laminate comprising:
   a multilayer substrate; an evaporated film; and a sealant layer,
   wherein the multilayer substrate includes at least a polypropylene resin layer and a surface coating layer,
   the polypropylene resin layer is subjected to a stretching process,
   the surface coating layer contains a resin material with a polar group, and
   the evaporated film comprises an inorganic oxide.
[Item 2]
   The barrier laminate according to Item 1, wherein
   the polypropylene resin layer and the sealant layer comprise the same material, and
   the same material is polypropylene.
[Item 3]
   A barrier laminate comprising:
   a multilayer substrate; a first evaporated film; an adhesive layer; and a sealant layer,
   wherein the multilayer substrate includes at least a polypropylene resin layer and a surface coating layer,
   the polypropylene resin layer is subjected to a stretching process,
   the surface coating layer contains a resin material with a polar group,
   the first evaporated film comprises an inorganic oxide, and
   the sealant layer includes a second evaporated film and a sealant substrate.
[Item 4]
   The barrier laminate according to Item 3, wherein
   the polypropylene resin layer and the sealant substrate comprise the same material, and
   the same material is polypropylene.
[Item 5]
   The barrier laminate according to Item 3 or 4, wherein
   the second evaporated film is an aluminum evaporated film, and
   the adhesive layer is an adhesive agent layer containing a cured product of a composition containing a polyester polyol and an isocyanate compound.
[Item 6]
   A barrier laminate comprising:
   a substrate; an adhesive layer; an evaporated film; an intermediate layer; and a sealant layer,
   the intermediate layer includes a surface coating layer and a polypropylene resin layer,
   the polypropylene resin layer is subjected to a stretching process,
   the surface coating layer contains a resin material with a polar group, and
   the evaporated film comprises an inorganic oxide.
[Item 7]
   The barrier laminate according to Item 6, wherein
   the polypropylene resin layer, the substrate, and the sealant layer comprise the same material, and
   the same material is polypropylene.
[Item 8]
   The barrier laminate according to Item 6 or 7, wherein the adhesive layer is an adhesive agent layer containing a cured product of a composition containing a polyester polyol and an isocyanate compound.
[Item 9]
   The barrier laminate according to any one of Items 1 to 8, wherein the surface coating layer has a thickness in the range of 0.08% to 20% of a total thickness of the multilayer substrate or the intermediate layer.
[Item 10]
   The barrier laminate according to any one of Items 1 to 9, wherein the surface coating layer has a thickness in the range of 0.02 to 10 µm.
[Item 11]
   The barrier laminate according to any one of Items 1 to 10, wherein the resin material is at least one resin material selected from ethylene vinyl alcohol copolymers (EVOHs), poly(vinyl alcohol) (PVA), polyesters, poly(ethylene imine), (meth)acrylic resins with a hydroxy group, nylon 6, nylon 6,6, MXD nylon, amorphous nylon, and polyurethanes.
[Item 12]
   The barrier laminate according to any one of Items 1 to 11, wherein the surface coating layer is a layer formed using an aqueous emulsion or a solvent emulsion.
[Item 13]
   The barrier laminate according to any one of Items 1 to 12, further comprising a barrier coating layer between the multilayer substrate and the evaporated film, between the multilayer substrate and the first evaporated film, or between the intermediate layer and the evaporated film.
[Item 14]
   The barrier laminate according to any one of Items 1 to 13, used for a packaging container.
[Item 15]
   A packaging container comprising the barrier laminate according to any one of Items 1 to 14.

## Claims

1. Use of a laminate comprising an evaporated film; a surface coating layer; and a polypropylene layer for manufacturing a barrier laminate, the barrier laminate comprising:
a substrate; an adhesive layer; the evaporated film; an intermediate layer; and a sealant layer, wherein
the intermediate layer includes the surface coating layer and the polypropylene resin layer,
the evaporated film is provided on the surface coating layer,
the laminate further includes a barrier coating layer on the evaporated film,
the polypropylene resin layer is subjected to a stretching process,
the surface coating layer contains a resin material with a polar group, and
the evaporated film comprises an inorganic oxide.

2. The use according to Claim 6, wherein
the polypropylene resin layer, the substrate, and the sealant layer comprise the same material, and
the same material is polypropylene.

3. The use according to Claim 1 or 2, wherein the adhesive layer is an adhesive agent layer containing a cured product of a composition containing a polyester polyol and an isocyanate compound.

4. The use according to any one of Claims 1 to 3, wherein the surface coating layer has a thickness in the range of 0.08% to 20% of a total thickness of the multilayer substrate or the intermediate layer.

5. The use according to any one of Claims 1 to 4, wherein the surface coating layer has a thickness in the range of 0.02 to 10 µm.

6. The use according to any one of Claims 1 to 5, wherein the resin material is at least one resin material selected from ethylene vinyl alcohol copolymers (EVOHs), poly(vinyl alcohol) (PVA), polyesters, poly(ethylene imine), (meth)acrylic resins with a hydroxy group, nylon 6, nylon 6,6, MXD nylon, amorphous nylon, and polyurethanes.

7. The use according to any one of Claims 1 to 6, wherein the surface coating layer is a layer formed using an aqueous emulsion or a solvent emulsion.
